(19) Europäisches Patentamt

European Patent Office

Office européen des brevets

(11) **EP 4 712 569 A1**

(12) **EUROPEAN PATENT APPLICATION**

(43) Date of publication:
**18.03.2026 Bulletin 2026/12**

(21) Application number: **25201859.3**

(22) Date of filing: **12.09.2025**

(51) International Patent Classification (IPC):
**H04W 36/36** (2009.01)     **H04W 36/00** (2009.01)

(52) Cooperative Patent Classification (CPC):
**H04W 36/362; H04W 36/00837**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  12.09.2024  KR 20240125178
       12.09.2024  KR 20240125181
       03.09.2025  KR 20250125218

(71) Applicant: **KT Corporation
Seongnam-si, Gyeonggi-do 13606 (KR)**

(72) Inventor: **HONG, Sung-pyo
13606 Seongnam-si, Gyeonggi-do (KR)**

(74) Representative: **BCKIP Part mbB
MK1
Landsbergerstraße 98, 3.Stock
80339 München (DE)**

(54) **CONDITIONAL L1L2 MOBILITY**

(57)    Provided are a method and apparatus for configuring mobility in a wireless communication system. The method of a terminal may include receiving a conditional layer 1 (L1)/layer 2 (L2) triggered mobility (LTM) configuration, starting an evaluation of an execution condition for conditional LTM based on the received conditional LTM configuration, and stopping the evaluation of the execution condition, wherein the stopping of the evaluation may be performed based on reception of ReconfigurationWith Synch.

Processed by Luminess, 75001 PARIS (FR)

EP 4 712 569 A1

**Description**

CROSS-REFERENCE TO RELATED THE APPLICATION

This application is based on and claims priority on Patent Application No. 10-2024-0125178 filed on Sep. 12, 2024, No. 10-2024-0125181 filed on Sep. 12, 2024, and No. 10-2025-0125218 filed on Sep. 3, 2025, in the Korean Intellectual Property Office.

BACKGROUND

Technical Field

The present disclosure relates to wireless communication applicable to 5G NR, 5G-Advanced and 6G.

Description of the Related Art

With the increase in the number of communication devices, there is a corresponding rise in communication traffic that must be managed. To handle this increased communication traffic, a next generation 5G system, which is an enhanced mobile broadband communication system compared to the existing LTE system, has become essential. Such a next generation 5G system has been designed based on scenarios which are classified into Enhanced Mobile BroadBand (eMBB), Ultra-reliable and low-latency communication (URLLC), Massive Machine-Type Communications (mMTC), and more.

eMBB, URLLC, and mMTC represent next generation mobile communication scenarios. eMBB is characterized by high spectral efficiency, high user experience data rate, and high peak data rate. URLLC is characterized by ultra-reliability, ultra-low latency, and ultra-high availability (e.g., vehicle-to-everything (V2X), Emergency Service, and Remote Control). mMTC is characterized by low cost, low energy consumption, short packet transmission, and massive connectivity (e.g., Internet of Things (IoT)).

SUMMARY

The disclosure relates to L1/L2 Triggered Mobility (LTM) for a terminal in a wireless communication system and is to provide a method and apparatus for supporting terminal-based LTM.

According to an embodiment, a method of operating a terminal (e.g., user equipment (UE) in a wireless communication system may be provided. The method may include receiving a conditional layer 1 (L1)/layer 2 (L2) triggered mobility (LTM) configuration, starting an evaluation of an execution condition for conditional LTM based on the received conditional LTM configuration, and stopping the evaluation of the execution condition, wherein the stopping of the evaluation is performed based on reception of a reconfiguration with synchronization (Reconfiguration WithSynch).

According to another embodiment, a terminal may be provided for operating in a wireless communication system. The terminal may include at least one processor; and at least one memory configured to store instructions and operably electrically connectable to the at least one processor, wherein operations performed based on the instructions executed by the at least one processor include: receiving a conditional layer 1 (L1)/layer 2 (L2) triggered mobility (LTM) configuration, starting an evaluation of an execution condition for conditional LTM based on the received conditional LTM configuration, and stopping the evaluation of the execution condition, wherein the stopping of the evaluation is performed based on reception of a reconfiguration with synchronization (Reconfiguration WithSynch).

Additionally, the terminal may receive the execution condition, wherein the execution condition may be included in a candidate radio resource control (RRC) information element for conditional LTM. Here, the execution condition may be generated by a candidate cell.

Meanwhile, the execution condition may be set as one of a layer 3 (L3) condition associated with a measurement identity or a layer 1 (L1) condition associated with an LTM channel state information (CSI) report configuration identity.

The conditional LTM configuration and the execution condition may be received via a first RRC reconfiguration message, and the Reconfiguration WithSynch may be received via a second RRC reconfiguration message.

The aforementioned Reconfiguration WithSynch is associated with a layer 3 (L3) handover.

BRIEF DESCRIPTION OF THE DRAWINGS

FIG. 1 is a diagram illustrating a wireless communication system.

FIG. 2 is a diagram illustrating a structure of a radio frame used in new radio (NR).

FIGS. 3A to 3C illustrate exemplary architectures for a wireless communication service.

FIG. 4 illustrates a slot structure of an NR frame.

FIG. 5 shows an example of a subframe type in NR.

FIG. 6 illustrates a structure of a self-contained slot.

FIG. 7 is a signal sequence diagram that illustrates a conditional LTM procedure according to an embodiment of the disclosure.

FIG. 8 is a block diagram showing apparatuses according to an embodiment of the disclosure.

FIG. 9 is a block diagram showing a terminal according to an embodiment of the disclosure.

FIG. 10 is a block diagram of a processor in accordance with an embodiment.

FIG. 11 is a detailed block diagram of a transceiver of a first apparatus shown in FIG. 8 or a transceiving unit of an apparatus shown in FIG. 9.

DETAILED DESCRIPTION

The technical terms used in this document are merely for describing specific embodiments and should not be considered to limit the scope of the disclosure. Unless otherwise defined, the technical terms used in this document should be interpreted as commonly understood by those skilled in the art, without being construed too broadly or too narrowly. If any technical terms used do not precisely convey the intended meaning of the disclosure, they should be replaced with or interpreted as technical terms that are accurately understood and recognized by those skilled in the art. The general terms used in this document should be interpreted according to their dictionary definitions, without overly narrow interpretations.

The singular form used in the disclosure includes the plural unless the context dictates otherwise. The term 'include' or 'have' may represent the presence of features, numbers, steps, operations, components, parts or the combination thereof described in the disclosure. The term 'include' or 'have' may not exclude the presence or addition of another feature, another number, another step, another operation, another component, another part or the combination thereof.

The terms 'first' and 'second' are used to describe various components without limiting them to these specific terms. The terms 'first' and 'second' are only used to distinguish one component from another component. For example, a first component may be named as a second component without departing from the scope of the disclosure.

When an element or layer is referred to as being "connected to" or "coupled to" another element or layer, it may be directly connected or coupled to the other element or layer, there might be intervening elements or layers. In contrast, when an element or layer is referred to as being "directly connected to" or "directly coupled to" another element or layer, there are no intervening elements or layers.

Hereinafter, the exemplary embodiments of the disclosure will be described in detail with reference to the accompanying drawings. In describing the disclosure, for ease of understanding, the same reference numerals will be used throughout the drawings for the same components, and repetitive description on these components will be omitted. Detailed description on well-known arts that may obscure the essence of the disclosure will be omitted. The accompanying drawings are provided to merely facilitate understanding of the embodiment of disclosure and should not be seen as limiting. It should be recognized that the essence of this disclosure extends the illustrations, encompassing, replacements or equivalents in variations of what is shown in the drawings.

In this disclosure, "A or B" may mean "only A", "only B", or "both A and B". In other words, "A or B" in the disclosure may be interpreted as "A and/or B". For example, "A, B or C" may mean "only A", "only B", "only C", or "any combination of A, B and C".

In this disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In this disclosure, "at least one of A and B" may mean "only A", "only B" or "both A and B". In addition, "at least one of A or B" or "at least one of A and/or B" may be interpreted as the same as "at least one of A and B".

In addition, "at least one of A, B and C" may mean "only A", "only B", "only C", or "any combination of A, B and C". Further, "at least one of A, B or C" or "at least one of A, B and/or C" may mean "at least one of A, B and C".

Also, parentheses used in this disclosure may mean "for example". For example, "control information (PDCCH)" may mean that "PDCCH" is an example of "control information". However, "control information" in this disclosure is not limited to "PDCCH". As another example, "control information (i.e., PDCCH)", may also mean that "PDCCH" is an example of "control information".

Each of the technical features described in one drawing in this disclosure may be implemented independently or simultaneously.

In the accompanying drawings, user equipment (UE) is illustrated as an example and may be referred to as a terminal, mobile equipment (ME), and the like. UE may be a portable device such as a laptop computer, a mobile phone, a personal digital assistance (PDA), a smart phone, a multimedia device, or the like. UE may be a non-portable device such as a personal computer (PC) or a vehicle-mounted device.

Hereinafter, the UE may be as an example of a device capable of wireless communication. The UE may be referred to as a wireless communication device, a wireless device, or a wireless apparatus. The operation performed by the UE may be applicable to any device capable of wireless communication. A device capable of wireless communication may also be referred to as a radio communication device, a wireless device, or a wireless apparatus.

A base station generally refers to a fixed station that communicates with a wireless device. The base station may include an evolved-NodeB (eNodeB), an evolved-NodeB (eNB), a BTS (Base Transceiver System), an access point (Access Point), gNB (Next generation NodeB), RRH(remote radio head), TP(transmission point), RP(reception point), and the repeater(relay).

While embodiments of the disclosure are described based on an long term evolution (LTE) system, an LTE-advanced (LTE-A) system, and a new radio (NR) system, such embodiments may be applicable to any communication system that fits the described criteria.

<Wireless Communication System>

With the success of long-term evolution (LTE)/LTE-A (LTE-Advanced) for the 4th generation mobile communication, the next generation mobile communication (e.g., 5th generation: also known as 5G mobile communication) has been commercialized and the follow-up studies are also ongoing.

The 5th generation mobile communications, as defined by the International Telecommunication Union (ITU), provide a data transmission rate of up to 20 Gbps and a minimum actual transmission rate of at least 100 Mbps anywhere. The official name of the 5th generation mobile telecommunications is 'IMT-2020'.

ITU proposes three usage scenarios: enhanced Mobile Broadband (eMBB), massive Machine Type Communication (mMTC) and Ultra Reliable and Low Latency Communications (URLLC).

URLLC is a usage scenario requiring high reliability and low latency. For example, services such as automatic driving, factory automation, augmented reality require high reliability and low latency (e.g., a delay time of less than 1 ms). The delay time of current 4G (e.g., LTE) is statistically about 21 to 43 ms (best 10%) and about 33 to 75 ms (median), which insufficient to support services requiring a delay time of about 1 ms or less. Meanwhile, eMBB is a usage scenario that requires ultra-wideband mobile data transmission.

That is, the 5G mobile communication system offers a higher capacity compared to current 4G LTE. The 5G mobile communication system may be designed to increase the density of mobile broadband users and support device to device (D2D), high stability, and machine type communication (MTC). 5G research and development focus on achieving lower latency times and lower battery consumption compared to 4G mobile communication systems, enhancing the implementation of the Internet of things (IoTs). A new radio access technology, known as new RAT or NR, may be introduced for such 5G mobile communication.

An NR frequency band is defined to include two frequency ranges FR1 and FR2. Table 1 below shows an example of the two frequency ranges FR1 and FR2. However, the numerical values associated with each frequency range may be subject to change, and the embodiments are not limited thereto. For convenience of description, FR1 in the NR system may refer to a Sub-6 GHz range, and FR2 may refer to an above-6 GHz range, which may be called millimeter waves (mmWs).

[Table 1]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

The numerical values of the frequency ranges may be subject to change in the NR system. For example, FR1 may range from about 410 MHz to 7125 MHz as listed in [Table 1]. That is, FR1 may include a frequency band of 6 GHz (or 5850, 5900, and 5925 MHz) or higher. For example, the frequency band of 6 GHz (or 5850, 5900, and 5925 MHz) or higher may include an unlicensed band. The unlicensed band may be used for various purposes, for example, vehicle communication (e.g., autonomous driving).

The 3GPP communication standards define downlink (DL) physical channels and DL physical signals. DL physical channels are related to resource elements (REs) that convey information from a higher layer while DL physical signals, used in the physical layer, correspond to REs that do not carry information from a higher layer. For example, DL physical channels include physical downlink shared channel (PDSCH), physical broadcast channel (PBCH), physical multicast channel (PMCH), physical control format indicator channel (PCFICH), physical downlink control channel (PDCCH), and physical hybrid ARQ indicator channel (PHICH). DL physical signals include reference signals (RSs) and synchronization signals (SSs). A reference signal (RS) is also known as a pilot signal and has a predefined special waveform known to both a gNode B (gNB) and a UE. For example, DL RSs include cell specific RS, UE-specific RS (UE-RS), positioning RS (PRS), and channel state information RS (CSI-RS). The 3GPP LTE/LTE-A standards also define uplink (UL) physical channels and UL physical signals. UL channels correspond to REs with information from a higher layer. UL physical signals are used in the physical layer and correspond to REs which do not carry information from a higher layer. For example, UL physical channels include physical uplink shared channel (PUSCH), physical uplink control channel (PUCCH), and physical random access channel (PRACH). UL physical signals include a demodulation reference signal (DMRS) for a UL control/data signal, and a sounding reference signal (SRS) used for UL channel measurement.

In this disclosure, PDCCH/PCFICH/PHICH/PDSCH refers to a set of time-frequency resources or a set of REs carrying downlink control information (DCI)/a control format indicator (CFI)/a DL acknowledgement/negative acknowledgement (ACK/NACK)/DL data. Further, PUCCH/PUSCH/PRACH refers to a set of time-frequency resources or a set of REs carrying UL control information (UCI)/UL data/a random access signal.

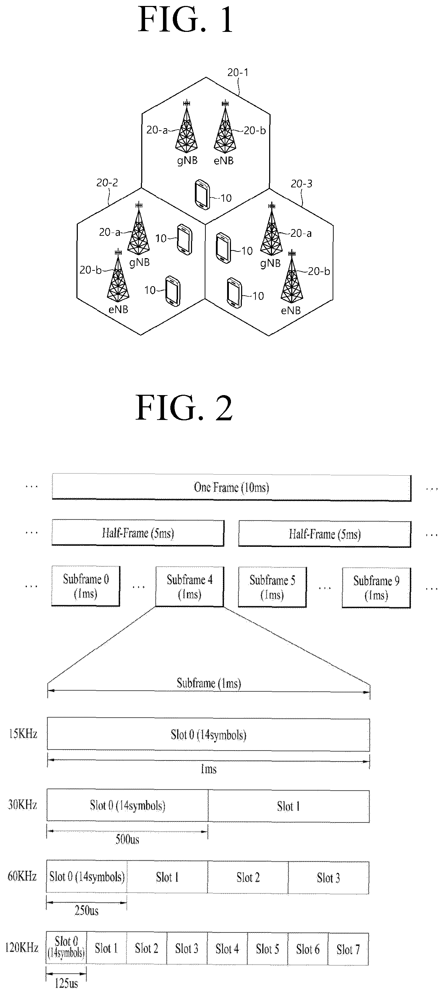

**FIG. 1 is a diagram illustrating a wireless communication system.**

Referring to FIG. 1, the wireless communication system may include at least one base station (BS). For example, the BSs may include a gNodeB (or gNB) 20a and an eNodeB (or eNB) 20b. The gNB 20a supports 5G mobile communication. The eNB 20b supports 4G mobile communication, that is, long term evolution (LTE).

Each BS 20a and 20b provides a communication service for a specific geographic area (commonly referred to as a cell) (20-1, 20-2, 20-3). The cell may also be divided into a plurality of areas (referred to as sectors).

A user equipment (UE) typically belongs to one cell, and the cell to which the UE belongs is called a serving cell. A base station providing a communication service to a serving cell is referred to as a serving base station (serving BS). Since the wireless communication system is a cellular system, there are other cells adjacent to the serving cell. The other cell adjacent to the serving cell is referred to as a neighbor cell. A base station that provides a communication service to a neighboring cell is referred to as a neighbor BS. The serving cell and the neighboring cell are relatively determined based on the UE.

Hereinafter, downlink means communication from the base station 20 to the UE 10, and uplink means communication from the UE 10 to the base station 20. In the downlink, a transmitter may be a part of the base station 20, and a receiver may be a part of the UE 10. In the uplink, the transmitter may be a part of the UE 10, and the receiver may be a part of the base station 20.

In a wireless communication system, there are primarily two schemes: frequency division duplex (FDD) scheme and time division duplex (TDD) scheme. In the FDD scheme, uplink transmission and downlink transmission occur on different frequency bands. Conversely, the TDD scheme allows both uplink transmission and downlink transmission to use the same frequency band, but at different times. A key characteristic of the TDD scheme is the substantial reciprocity of the channel response, meaning that the downlink channel response and the uplink channel response are almost identical within a given frequency domain. This reciprocity in TDD-based radio communication systems enables the estimation of the downlink channel response from the uplink channel response. In the TDD scheme, since uplink transmission and downlink transmission are time-divided in the entire frequency band, it is not possible to simultaneously perform downlink transmission by the base station and uplink transmission by the UE. In a TDD system where uplink transmission and downlink transmission are divided into subframe units, uplink transmission and downlink transmission are performed in different subframes.

**FIG. 2 is a diagram illustrating a structure of a radio frame used in new radio (NR).**

In NR, UL and DL transmissions are configured in frames. Each radio frame has a length of 10 ms and is divided into two 5-ms half frames (HFs). Each half frame is divided into five 1-ms subframes. A subframe is divided into one or more slots, and the number of slots in a subframe depends on the subcarrier spacing (SCS). Each slot includes 12 or 14 OFDM(A) symbols according to a Cyclic Prefix (CP). With a normal CP, a slot includes 14 OFDM symbols. With an extended CP, a slot includes 12 OFDM symbols. A symbol may include an OFDM symbol (CP-OFDM symbol) and an SC-FDMA symbol (or DFT-s-OFDM symbol).

**<Support of Various Numerologies>**

As wireless communication technology advances, the NR system may offer various numerologies to terminals. For example, when a subcarrier spacing (SCS) is set at 15 kHz, it supports a broad range of the typical cellular bands. When a subcarrier spacing (SCS) is set at 30 kHz/60 kHz, it supports a dense-urban, lower latency, wider carrier bandwidth. When the SCS is 60 kHz or higher, it supports a bandwidth greater than 24.25 GHz in order to overcome phase noise.

These numerologies may be defined by the cyclic prefix (CP) length and the SCS. A single cell in the NR system is capable of providing multiple numerologies to terminals. Table 2 below shows the relationship between the subcarrier spacing, corresponding CP length, and the index of a numerology (represented by $\mu$).

[Table 2]

| μ | Δf=2^μ·15 [kHz] | CP |
|---|---|---|
| 0 | 15 | normal |
| 1 | 30 | normal |
| 2 | 60 | normal, extended |
| 3 | 120 | normal |
| 4 | 240 | normal |
| 5 | 480 | normal |
| 6 | 960 | normal |

Table 3 below shows the number of OFDM symbols per slot ($N^{slot}_{symb}$), the number of slots per frame ($N^{frame,\mu}_{slot}$), and the number of slots per subframe ($N^{subframe,\mu}_{slot}$) according to each numerology expressed by μ in the case of a normal CP.

[Table 3]

| μ | Δf=2^μ·15 [kHz] | $N^{slot}_{symb}$ | $N^{frame,\mu}_{slot}$ | $N^{subframe,\mu}_{slot}$ |
|---|---|---|---|---|
| 0 | 15 | 14 | 10 | 1 |
| 1 | 30 | 14 | 20 | 2 |
| 2 | 60 | 14 | 40 | 4 |
| 3 | 120 | 14 | 80 | 8 |
| 4 | 240 | 14 | 160 | 16 |
| 5 | 480 | 14 | 320 | 32 |
| 6 | 960 | 14 | 640 | 64 |

Table 4 below shows the number of OFDM symbols per slot ($N^{slot}_{symb}$), the number of slots per frame ($N^{frame,\mu}_{slot}$), and the number of slots per subframe ($N^{subframe,\mu}_{slot}$) of a numerology represented by μ in the case of an extended CP.

[Table 4]

| μ | SCS (15*2^u) | $N^{slot}_{symb}$ | $N^{frame,\mu}_{slot}$ | $N^{subframe,\mu}_{slot}$ |
|---|---|---|---|---|
| 2 | 60KHz (u=2) | 12 | 40 | 4 |

In the NR system, OFDM(A) numerologies (e.g., SCS, CP length, and so on) may be configured differently across multiple cells that are integrated with a single terminal. Accordingly, the duration of time resource may vary among these integrated cells. Here, the duration may be referred to as a section. The time resource may include a subframe, a slot or a transmission time interval (TTI). Further, the time resource may be collectively referred to as a time unit (TU) for simplicity and include the same number of symbols.

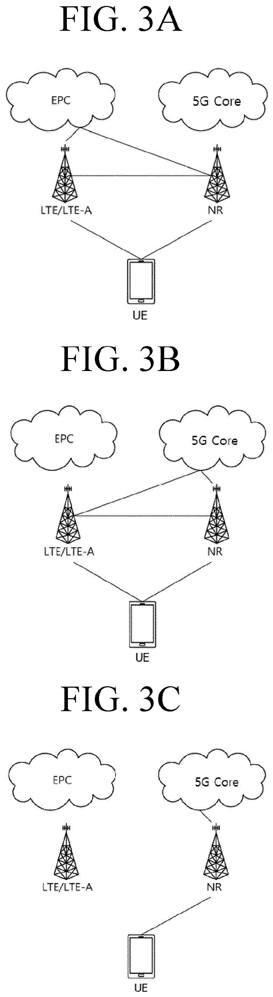

**FIGS. 3A to 3C illustrate exemplary architectures for a wireless communication service.**

Referring to FIG. 3A, a UE is connected in dual connectivity (DC) with an LTE/LTE-A cell and a NR cell.

The NR cell is connected with a core network for the legacy fourth-generation mobile communication, that is, Evolved Packet core (EPC).

Referring to FIG. 3B, the LTE/LTE-A cell is connected with a core network for 5th generation mobile communication, that is, a 5G core network.

A service provided by the architecture shown in FIGS. 3A and 3B is referred to as a non-standalone (NSA) service.

Referring to FIG. 3C, a UE is connected only with an NR cell. A service provided by this architecture is referred to as a standalone (SA) service.

In the new radio access technology (NR), the use of a downlink subframe for reception from a base station and an uplink subframe for transmission to the base station may be employed. This method may be applicable to both paired spectrums and unpaired spectrums. Paired spectrums involve two subcarriers designated for downlink and uplink operations. For example, one subcarrier within a pair of spectrums may include a pair of a downlink band and an uplink band.

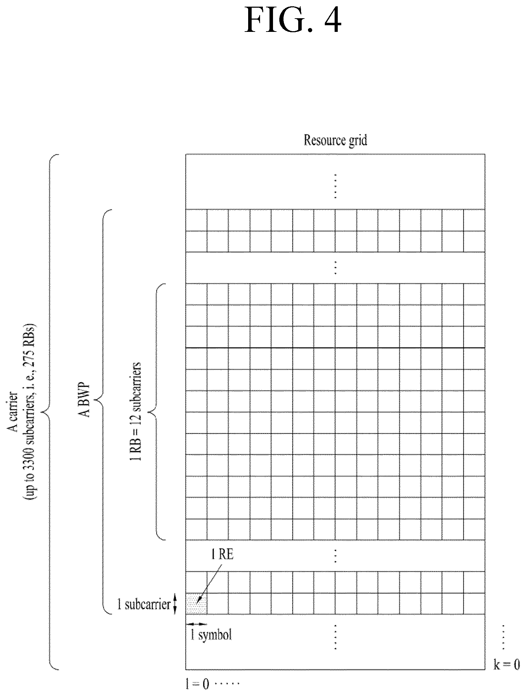

FIG. 4 illustrates a slot structure of an NR frame.

A slot in the NR system includes a plurality of symbols in the time domain. For example, in the case of the normal CP, one slot includes seven symbols. On the other hand, in the case of the extended CP, one slot includes six symbols. A carrier includes a plurality of subcarriers in the frequency domain. A resource block (RB) is defined as a set of consecutive subcarriers (e.g., 12 consecutive subcarriers) in the frequency domain. A bandwidth part (BWP) is defined as a sequence of consecutive physical resource blocks (PRBs) in the frequency domain and may be associated with a specific numerology (e.g., SCS, CP length, etc.). A terminal may be configured with up to N (e.g., five) BWPs in each of downlink and uplink. Downlink or uplink transmission is performed through an activated BWP. Among the BWPs configured for the terminal, only one BWP may be activated at a given time. In the resource grid, each element is referred to as a resource element (RE), and one complex symbol may be mapped thereto.

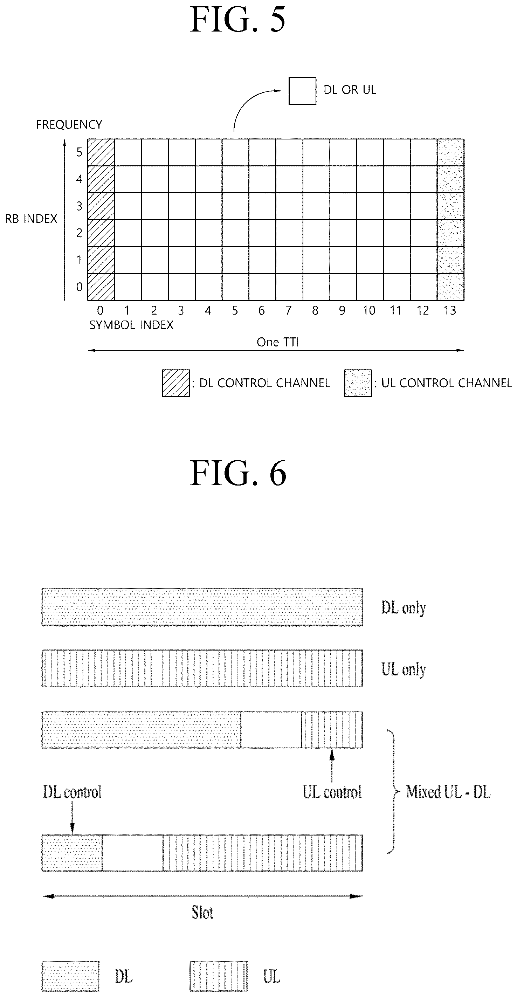

FIG. 5 shows an example of a subframe type in NR.

In NR (or new RAT), a Transmission Time Interval (TTI), as shown in FIG. 5, may be referred to as a subframe or slot. The subframe (or slot) may be utilized in a TDD system to minimize data transmission delay. As shown in FIG. 5, a subframe (or slot) includes 14 symbols. The symbol at the head of the subframe (or slot) may be allocated for a DL control channel, and the symbol at the end of the subframe (or slot) may be assigned for a UL control channel. The remaining symbols may be used for either DL data transmission or UL data transmission. This subframe (or slot) structure allows sequential downlink and uplink transmissions in a single subframe (or slot). Accordingly, downlink data may be received in a subframe (or slot) and uplink ACK/NACK may be transmitted in the same subframe (or slot).

Such a subframe (or slot) structure may be referred to as a self-contained subframe (or slot).

The first N symbols in a slot may be used to transmit a DL control channel and referred to as a DL control region, hereinafter. The last M symbols in the slot may be used to transmit a UL control channel and referred to as a UL control region. N and M are integers greater than 0. A resource region between the DL control region and the UL control region may be used for either DL data transmission or UL data transmission and referred to as a data region. For example, a physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region.

Using this subframe (or slot) structure reduces the time required for retransmitting data that has failed in reception, thereby minimizing overall data transmission latency. In such a self-contained subframe (or slot) structure, a time gap may be required for transitioning between a transmission mode and a reception mode or from the reception mode to the transmission mode. To accommodate this, a few OFDM symbols when switch from DL to UL in the subframe structure may be configured to a guard period (GP).

FIG. 6 illustrates a structure of a self-contained slot.

In the NR system, the frames are structured as a self-contained structure, where one single slot includes a DL control channel, either a DL or UL data channel, and UL control channel. For example, the first N symbols in a slot may be used for transmitting a DL control channel and referred to as a DL control region. The last M symbols in the slot may be used for transmitting a UL control channel and referred to as a UL control region. N and M are integers greater than 0. A resource region between the DL control region and the UL control region may be used for either DL data transmission or UL data transmission and referred to as a data region.

For example, the following configurations may be considered. The durations are listed in temporal order.

    1. DL only configuration
    2. UL only configuration
    3. Mixed UL-DL configuration

-

DL region + Guard Period (GP) + UL control region

-

DL control region + GP + UL region

    DL region: (i) DL data region, (ii) DL control region + DL data region

UL region: (i) UL data region, (ii) UL data region + UL control region

A physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Through the PDCCH, Downlink Control Information (DCI), for example, DL data scheduling information or UL data scheduling data may be transmitted. Through the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A guard period (GP) provides a time gap during a process where a gNB and a UE transition from the transmission mode to the reception mode or a process where the gNB and UE transition from the reception mode to the transmission mode. Some of symbols within a subframe that transition from DL to UL mode may be configured as the GP.

LTM (L1/L2 Triggered Mobility)

The disclosure relates to L1/L2 Triggered Mobility (LTM) for a terminal.

In 3GPP, standardization of L1/L2 Triggered Mobility (LTM) functions was standardized in release-18 (Rel-18). Hereinafter, L1/L2 Triggered Mobility is referred to as LTM. However, this is only for the convenience of description. The embodiments are not limited thereto. The term "LTM" may alternatively refer to any other terms, such as Layer 1 Mobility, Layer 2 Mobility, and lower layer Mobility. The lower layers denote the physical layer and the MAC layer in the wireless communication protocol stack. Hereinafter, unless otherwise specified, lower layers represent at least one of the physical layer and the MAC layer. 3GPP Rel-18 LTM supported both intra-gNB-Distributed Unit (gNB-DU) mobility and intra-gNB-Central Unit (gNB-CU) mobility. That is, in the prior art, LTM only supported cell changes within a gNB-CU (intra-gNB-CU mobility). Accordingly, it was difficult to support inter-gNB-CU mobility to the corresponding terminal. In addition, LTM according to the prior art is a procedure in which a base station (gNB) receives an L1 measurement report from a user equipment (UE) and, based on this, changes the serving cell (e.g., PCell (Primary Cell)/PSCell (Primary Secondary Cell)) of the UE via a cell switch command signaled through a Medium Access Control (MAC) Control Element (CE). The cell switch command indicates an LTM candidate configuration that the gNB has prepared in advance and provided to the UE through Radio Resource Control (RRC) signaling. Then, the UE switches to the target cell according to the cell switch command. As such, LTM in the prior art is a network-based cell switching procedure based on a network decision. Therefore, while the network receives the L1 measurement report, decides on LTM, and transmits the LTM cell switch MAC CE, it was vulnerable to failures due to radio link fluctuations.

Here, the aforementioned gNB-CU represents a logical node that hosts the Radio Resource Control (RRC), Service Data Adaptation Protocol (SDAP), and Packet Data Convergence Protocol (PDCP) layers of a base station (or a logical node that hosts one or more of the higher-layer radio access protocols). To support efficient network deployment, NR provides a structure that separates a base station (gNB) into a centralized node (hereinafter referred to as CU/gNB-CU for convenience) and a distributed node (hereinafter referred to as DU/gNB-DU for convenience). The radio network includes base stations connected to the 5G Core network (5GC) via the NG interface. The base stations are interconnected via the Xn interface. One base station may consist of one gNB-CU and one or more gNB-DUs. The gNB-CU and gNB-DU are connected via the F1 interface. One gNB-DU may be connected to only one gNB-CU. The NG interface and the Xn-C interface for one base station including a gNB-CU and a gNB-DU are terminated at the gNB-CU. The gNB-DUs connected to the gNB-CU appear as a single base station to other base stations and the 5GC. The gNB-DU is a logical node that hosts the Radio Link Control (RLC), Medium Access Control (MAC), and Physical (PHY) layers of a base station (or a logical node that hosts one or more of the radio access protocols not included in the gNB-CU). One gNB-DU supports one or a plurality of cells. One cell is served by only one gNB-DU.

As described above, the typical LTM was a network-based mobility support technology that only supported mobility within an intra-gNB-CU. Accordingly, a radio link failure could be triggered due to delays in the cell switch decision process, and mobility between different base stations was unsupported. The present disclosure, devised to solve these problems, proposes a configuration method and apparatus for supporting UE-based conditional LTM.

Hereinafter, a method for providing mobility based on 5G NR radio access technology will be described in detail. However, this is for convenience of explanation, and the disclosure may also be applied to cell change/switch based on any radio access technology (e.g., 6G). The embodiments described in herein may refer to the information elements, procedures, and operation contents specified in the NR specifications (e.g., TS 38.321 for NR MAC specification, TS 38.331 for NR RRC specification). Even if the definitions of the corresponding information elements, related procedures, and related terminal operation contents (e.g., UE operations) are not described in this specification, the corresponding contents specified in the known standard specifications are deemed incorporated herein by reference. The embodiments provided below may be implemented individually or by various combining each embodiment, and such variations are also within the scope of the disclosure.

Any function described below may be defined as an individual UE radio capability or UE Core network capability and may be transmitted by the UE to a base station/core network entity (e.g., Access and Mobility Management Function (AMF)/Session Management Function (SMF)) through corresponding signaling. Alternatively, any functions may be combined and defined as a corresponding UE capability and transmitted to the base station/core network entity through corresponding signaling upon a request from the base station.

The base station may transmit/indicate, to the terminal via an RRC message, information regarding the allowance/support/configuration/activation state of any function or any combination of functions described below. For example, the base station may indicate this to the terminal (e.g., UE) before or after the configuration/application of the corresponding function/function combination, or simultaneously with the configuration/application of the corresponding function/function combination. The corresponding RRC message may be broadcast via system information. Alternatively, the corresponding RRC message may be delivered to the terminal via a dedicated RRC message.


**First Disclosure**


Defining RRC signaling/container/message/information element related to conditional LTM configuration

To support UE-based LTM, the base station may configure the UE to execute LTM when one or more LTM execution/trigger conditions are met at the UE. For convenience of explanation, the RRC container/message/information element for indicating the corresponding configuration is referred to as the conditional LTM configuration. This is for convenience of explanation and may alternatively be expressed using other term (e.g., UE based LTM, autonomous LTM, conditional-LTM-config, LTM-config, or conditional-LTM-reconfiguration).

The conditional LTM configuration may be defined/used as an RRC container/message/information element directly included in an RRC reconfiguration message (RRCReconfiguration) as shown in Table 5 or Table 6.

For example, as shown in Table 5, by allowing the base station to transmit the corresponding RRC container/information element set to configure (setup) or release, the UE may add/modify/release the corresponding UE variable stored based on the setup/release information. For example, if the corresponding RRC container/information element is set to setup, the UE may perform the conditional LTM configuration. Otherwise (if set to release), the UE may perform a conditional LTM release. The UE may remove an entry in the conditional LTM UE variable (e.g., index information for indicating/determining RLC reset in the serving cell, index information for indicating/determining UE-based TA measurement in the serving cell (UE-measuredTA-ID), and/or index information for indicating/determining PDCP reset (and/or security key update) in the serving cell). That is, the UE may release the conditional LTM configuration.

For another example, as shown in Table 6, the base station may transmit the corresponding RRC container/information element without setting it to either configure or release. If the corresponding information is included, the conditional-ltm-config RRC container/information element may be applied. That is, the lower parameters included in the corresponding RRC container/information element may be configured.

[Table 5]

| | |
|---|---|
| RRCReconfiguration-IEs ::= | SEQUENCE { |
| conditional-ltm-Config | SetupRelease |
| {Conditional-LTM-Config} | OPTIONAL, -- Need M |
| } | |

[Table 6]

| | |
|---|---|
| RRCReconfiguration-IEs ::= | SEQUENCE { |
| conditional-ltm-Config | Conditional-LTM-Config |
| OPTIONAL, -- Need M | |
| } | |

For another example, the conditional LTM configuration may be defined/used as an inter-node RRC container/message/information element included in an Xn Application Protocol (XnAP) message (e.g., handover request and/or handover request ack) between base stations. The conditional LTM configuration may be defined/used as an (XnAP) information element included in an XnAP message between base stations.

For another example, the conditional LTM configuration may be for a cell switch within one base station/base station-CU. To eliminate complexity, the conditional LTM configuration may be configured by only one of the Master Cell Group (MCG) or the Secondary Cell Group (SCG). For example, the conditional LTM configuration may be configured only for the MCG. For a UE is configured with dual connectivity, the base station may prevent a conditional LTM configuration associated with the MCG and a conditional LTM configuration associated with the SCG from being simultaneously configured/applied/executed. The network/base station may have only one candidate target special cell for the conditional LTM configuration and configure it for the UE. The conditional LTM configuration may have candidate cell(s) provided by only one of the MCG or SCG of the corresponding UE. The base station may allow only one of a conditional LTM configuration associated with the MCG or a conditional LTM configuration associated with the SCG to be configured for the UE. The base station may restrict the simultaneous configuration of a conditional LTM configuration associated with the MCG and a conditional LTM configuration associated with the SCG for the UE.

For another example, if the UE maintains a conditional LTM configuration (or LTM configuration) associated with the MCG (or SCG) and receives a conditional LTM configuration (or LTM configuration) associated with the SCG (or MCG) from the base station, it may release/suspend the previous configuration.

In another embodiment, the network/base station may configure the UE such that one conditional LTM candidate configuration included in the conditional LTM configuration has only one candidate target serving cell. For example, the conditional LTM candidate configuration may have a candidate cell provided by only one of the MCG or SCG. The base station may allow only one of a conditional LTM candidate configuration from the MCG or a conditional LTM candidate configuration from the SCG to be configured for the UE. The base station may restrict the simultaneous configuration of a conditional LTM candidate configuration from the MCG and a conditional LTM candidate configuration from the SCG for the UE.

For another example, in dual connectivity (e.g., NR-DC), a UE may receive two independent conditional LTM configurations at different times. One is a conditional LTM configuration associated with the MCG, which may be received via an RRC reconfiguration message through Signaling Radio Bearer 1 (SRB1). The other is a conditional LTM configuration associated with the SCG, which may be received via an RRC reconfiguration message through SRB3 or SRB1. The corresponding conditional LTM may be performed independently. Only the conditional LTM associated with one of the MCG and SCG may be allowed to be applied/executed. Indication information for this may be indicated from the base station to the UE. The master base station (or secondary base station) may, when configuring/indicating the conditional LTM associated with the MCG (or SCG) to the UE, indicate information for this to the secondary base station (or master base station) via an XnAP message.

For another example, the conditional LTM configuration information may include a conditional LTM candidate configuration/configuration list for a plurality of candidate/target base stations/cells. For example, the conditional LTM configuration information may include list information for conditional LTM candidate configurations to be added/modified (e.g., conditional-ltm-candidate-AddModList/ltm-candidate-AddModList). The conditional LTM configuration information may include list information for conditional LTM candidate configurations to be released (e.g., conditional-ltm-candidate-ReleaseList/ltm-candidate-ReleaseList). Through this, a plurality of (e.g., up to 8) conditional LTM candidate configurations may be added/modified/released.

For another example, the conditional LTM configuration information may include reference configuration information (Conditional LTM reference configuration). The conditional LTM reference configuration may represent a common configuration within the same cell group for partially configured conditional LTM candidate configurations. The conditional LTM reference configuration may be used by the UE to generate a complete conditional LTM candidate configuration by applying the conditional LTM candidate configuration on top of the conditional LTM reference configuration. This allows for effective handling of common configurations. The conditional LTM candidate configuration represents a configuration associated with one conditional LTM candidate cell. The conditional LTM candidate configuration may be indicated as a complete conditional LTM candidate configuration or as a delta configuration (difference configuration) with respect to the conditional LTM reference configuration. The conditional LTM reference configuration may include an RRC reconfiguration container/message/information element.

For another example, to support conditional LTM, the conditional LTM configuration information may use/include one single conditional LTM reference configuration to indicate a plurality of conditional LTM candidate configurations among one or more base stations. The source/serving base station/base station-CU/CG (cell group) may receive/collect a plurality of candidate configurations based on one conditional LTM reference configuration (indicated by the source/serving base station) from a plurality of candidate base stations/base station-CUs/CGs. The source/serving base station/base station-CU/CG may transmit common configuration information based on one conditional LTM reference configuration to the plurality of candidate base stations/base station-CUs/CGs to support subsequent LTM. The candidate base station/base station-CU/CG may transmit a confirmation message or response message for this to the source base station/base station-CU/CG.

For another example, to effectively support conditional LTM among a plurality of base stations, the conditional LTM configuration information may use/include a plurality of conditional LTM reference configurations to indicate a plurality of conditional LTM candidate configurations. Each base station/base station-CU/CG may generate/use/include one single conditional LTM reference configuration for each respective base station/base station-CU/CG and transmit it to the source/serving base station. The source/serving base station/base station-CU/CG may receive/collect a plurality of candidate configurations based on the conditional LTM reference configurations from the plurality of candidate base stations/base station-CUs/CGs. The source/serving base station/base station-CU/CG may transmit common configuration information to the plurality of candidate base stations/base station-CUs/CGs to support subsequent LTM. The candidate base station/base station-CU/CG may transmit a confirmation message (response message) for this to the source base station/base station-CU/CG.

For another example, the conditional LTM configuration information may include information for instructing the UE to perform a conditional LTM cell switch (or conditional LTM reconfiguration) during an RRC reset procedure for a UE configured with a conditional LTM configuration.

For another example, the conditional LTM configuration information may include index information for indicating/determining UE-based TA measurement in the serving cell. The UE stores the received index information for indicating/determining UE-based timing advance (TA) measurement in the serving cell in its corresponding UE variable (if the UE variable currently contains that information, it updates the value). If the conditional LTM candidate configuration includes index information for indicating/determining UE-based TA measurement for the corresponding candidate cell, and the value of the index information for indicating/determining UE-based TA measurement for the corresponding conditional LTM candidate cell is equal to the value of the index information for indicating/determining UE-based TA measurement in the serving cell within the UE variable, the UE may indicate to a lower layer (e.g., PHY/MAC) that the UE is configured with UE-based TA measurement for the corresponding conditional LTM candidate. Otherwise, the UE may indicate to the lower layer (e.g., PHY/MAC) that the UE is not configured with UE-based TA measurement for the corresponding conditional LTM candidate.

For another example, the conditional LTM configuration information may include index information for indicating/determining RLC reset in the serving cell. The UE stores the received index information for indicating/determining RLC reset in the serving cell (e.g., ServingCellNoResetID) in its corresponding UE variable (if the UE variable currently contains that information, it updates the value). If the value of the index information for indicating/determining RLC reset for the corresponding conditional LTM candidate cell is not equal to the value of the index information for indicating/determining RLC reset in the serving cell within the UE variable, the UE resets the corresponding RLC entity (at the end of this procedure) (after applying the configuration within the conditional LTM candidate configuration in the conditional LTM). The UE may replace (e.g., update) the value of the index information for indicating/determining RLC reset in the serving cell within its UE variable with the value of the index information for indicating/determining RLC reset for the corresponding conditional LTM candidate cell.

For another example, the conditional LTM configuration information may include index information for indicating/determining PDCP reset (and/or security key update) in the serving cell. The UE stores the received index information for indicating/determining PDCP reset in the serving cell in its corresponding UE variable (if the UE variable currently contains that information, it replaces (e.g., updates) the value). If the value of the index information for indicating/determining PDCP reset for the corresponding conditional LTM candidate cell is not equal to the value of the index information for indicating/determining PDCP reset in the serving cell within the UE variable, the UE resets the corresponding PDCP entity (at the end of this procedure) (after applying the configuration within the conditional LTM candidate configuration in the conditional LTM). The UE performs the corresponding security key update. The UE may replace (e.g., update) the value of the index information for indicating/determining PDCP reset in the serving cell within its UE variable with the value of the index information for indicating/determining PDCP reset for the corresponding conditional LTM candidate cell.

For another example, the conditional LTM configuration information may include a configuration/configuration list for defining one or more channel state information (CSI) resource groups for one or more conditional LTM candidate configurations. For example, the conditional LTM configuration information may include list information for conditional LTM CSI resource configurations to be added/modified (e.g., conditional-ltm-CSI-resource-Config-AddModList/ltm-CSI-resource-Config-AddModList). The conditional LTM configuration information may include list information for conditional LTM CSI resource configurations to be released (e.g., conditional-ltm-CSI-resource-Config-ReleaseList/ltm-CSI-resource-Config-ReleaseList). The conditional LTM CSI resource configuration information may include at least one of: information for identifying the corresponding conditional LTM CSI resource configuration (e.g., conditional-ltm-CSI-ResourceConfigId/ltm-CSI-ResourceConfigId), information for indicating a Synchronization Signal / Physical Broadcast Channel (SS/PBCH) block resource set included in the corresponding conditional LTM CSI resource configuration (e.g., SSB index list) (e.g., conditional-ltm-CSI-SSB-ResourceSet/ltm-CSI-SSB-ResourceSet), information for indicating a CSI-RS block resource set included in the corresponding conditional LTM CSI resource configuration (e.g., CRI list) (e.g.,

conditional-ltm-CSI-RS-ResourceSet/ltm-CSI-RS-ResourceSet), and a list of information for identifying a candidate configuration associated with or related to the corresponding SS/PBCH block resource set or CSI-RS block resource set (e.g., conditional-ltm-candidateID/ltm-candidateID).

For another example, the source/serving base station/base station-CU/base station-DU may generate a common CSI resource configuration for evaluating conditional LTM execution/trigger conditions on candidate cells based on information received from one or more target/candidate base stations/base station-CUs/base station-DUs. The source/serving base station/base station-CU/base station-DU may transmit the common CSI resource configuration to the one or more target/candidate base stations/base station-CUs/base station-DUs. And it may receive a response or a confirmation for this from the target/candidate base station/base station-CU/base station-DU. The corresponding procedure may be performed by defining a separate XnAP/F1 Application Protocol (F1AP) message before the transmission/reception of XnAP/F1AP messages (e.g., handover request message, handover request ack message) for conditional LTM preparation. Alternatively, the corresponding procedure may be performed by including the corresponding XnAP information element or inter-node RRC message in the XnAP message for conditional LTM preparation (e.g., handover request message, handover request ack message). Alternatively, the corresponding procedure may be performed by defining the corresponding XnAP/F1AP message after the transmission/reception of XnAP/F1AP messages (e.g., handover request message, handover request ack message) for conditional LTM preparation.

For another example, the conditional LTM configuration may include an RRC container/message/information element for a conditional LTM candidate (e.g., conditional-LTM-candidate/LTM-candidate)/candidate configuration through list information for conditional LTM candidate configurations to be added/modified (e.g., conditional-ltm-candidate-AddModList/ltm-candidate-AddModList). Through this, LTM-related RRC configuration parameters for a target/candidate cell may be indicated. The RRC container/message/information element for the conditional LTM candidate (e.g., conditional-LTM-candidate/LTM-candidate) may include information for identifying the corresponding conditional LTM candidate/candidate configuration. The RRC container/message/information element for the conditional LTM candidate (e.g., conditional-LTM-candidate/LTM-candidate) may include information for identifying the corresponding conditional LTM candidate cell. The RRC container/message/information element for the conditional LTM candidate (e.g., conditional-LTM-candidate/LTM-candidate) may include the Physical Cell Identity (PCI) information of the special cell of the corresponding conditional LTM candidate configuration. The RRC container/message/information element for the conditional LTM candidate (e.g., conditional-LTM-candidate/LTM-candidate) may include Synchronization Signal Block (SSB) configuration information in the corresponding conditional LTM candidate configuration. The corresponding SSB configuration information may include SSB frequency, Subcarrier Spacing (SCS), SSB periodicity, ssb-PositionsInBurst, and/or ss-PBCH-BlockPower as sub-information elements. The RRC container/message/information element for the conditional LTM candidate (e.g., conditional-LTM-candidate/LTM-candidate) may include information for indicating the corresponding conditional LTM candidate configuration through an RRC reconfiguration message/container/information element (e.g., conditional-LTM-candidateConfig/LTM-candidateConfig). The RRC container/message/information element for the conditional LTM candidate (e.g., conditional-LTM-candidate/LTM-candidate) may include information for indicating whether the corresponding conditional LTM candidate configuration (e.g., conditional-LTM-candidateConfig/LTM-candidateConfig) is a complete configuration. The RRC container/message/information element for the conditional LTM candidate (e.g., conditional-LTM-candidate/LTM-candidate) may include information for an early uplink synchronization configuration. The RRC container/message/information element for the conditional LTM candidate (e.g., conditional-LTM-candidate/LTM-candidate) may include index information for indicating/determining UE-based TA measurement for the corresponding conditional LTM candidate cell. The RRC container/message/information element for the conditional LTM candidate (e.g., conditional-LTM-candidate/LTM-candidate) may include index information for indicating/determining RLC reset for the corresponding conditional LTM candidate cell. The RRC container/message/information element for the conditional LTM candidate (e.g., conditional-LTM-candidate/LTM-candidate) may include index information for indicating/determining PDCP reset for the corresponding conditional LTM candidate cell. The RRC container/message/information element for the conditional LTM candidate (e.g., conditional-LTM-candidate/LTM-candidate) may include one or more conditional LTM execution conditions (or trigger conditions). The conditional LTM execution condition (or trigger condition) may be associated/mapped with information for identifying the corresponding conditional LTM candidate/candidate configuration and/or the corresponding conditional LTM candidate configuration (e.g., conditional-LTM-candidateConfig/LTM-candidateConfig). The RRC container/message/information element for the conditional LTM candidate (e.g., conditional-LTM-candidate/LTM-candidate) may apply the corresponding stored conditional LTM candidate configuration when the corresponding execution condition is met/satisfied by including and associating a plurality of the aforementioned information, such as information for identifying the corresponding conditional LTM candidate configuration, the conditional LTM execution condition, and information for indicating the corresponding conditional LTM candidate configuration via an RRC reconfiguration message/container/information element.

For another example, any container/message/information element included in the conditional LTM configuration may allow the serving/source base station/base station-DU to determine/generate/modify the corresponding parameters based on the conditional LTM candidate configuration generated by the candidate/target base station/base station-DU and deliver them to the UE.

For another example, any container/message/information element included in the conditional LTM configuration may allow the serving/source base station/base station-DU to transparently deliver the conditional LTM candidate configuration generated by the candidate/target base station/base station-DU to the UE. For example, for the execution/trigger condition, the candidate/target cell/base station may determine/generate/modify the corresponding parameters and have the serving/source cell/base station deliver the corresponding information to the UE.

For another example, for the execution/trigger condition, the serving/source base station/base station-DU may determine/generate/modify the corresponding parameters and deliver them to the UE.

For another example, for the execution/trigger condition, the serving/source base station/base station-DU may deliver the corresponding parameters to the candidate/target base station/base station-DU via an XnAP/F1AP message (e.g., a handover request message) during the conditional LTM preparation phase.

For another example, for the execution/trigger condition, the target/candidate base station/base station-DU may deliver the corresponding/related/proposed/indicated parameters to the serving/source base station/base station-DU via an XnAP/F1AP message (e.g., a handover request acknowledgment message) during the conditional LTM preparation phase.

For another example, for the execution/trigger condition, the serving/source base station/base station-DU may determine/generate/modify the corresponding parameters considering the trigger condition indicated by the candidate/target base station/base station-DU and deliver them to the UE.

For another example, the conditional LTM execution condition may include one or more trigger conditions.

Preparation of conditional LTM configuration between base stations

To support UE-based LTM, a base station may configure a UE to execute LTM when one or more LTM execution/trigger conditions are met at the UE. The conditional LTM configuration may include a conditional LTM candidate configuration and an execution/trigger condition for conditional LTM execution/application. To support conditional LTM between base stations/base station-DUs, the parameters of the conditional LTM configuration need to be generated/prepared/determined during the conditional LTM preparation phase.

For example, during the conditional LTM configuration preparation phase, the source base station/base station-CU/base station-DU may decide on the use/utilization/UE configuration/UE indication of conditional LTM.

For another example, during the conditional LTM configuration preparation phase, the source base station/base station-CU/base station-DU may initiate the conditional LTM configuration.

For another example, during the conditional LTM configuration preparation phase, based on a conditional LTM request from the source base station/base station-CU/base station-DU (e.g., an indication via a handover request or a distinct XnAP/F1AP message), the target/candidate base station/base station-CU/base station-DU may prepare/generate/determine lower layer RRC configurations (e.g., at least one of TCI state configuration, RACH configuration, CSI report configuration, and CSI resource configuration). For example, the conditional LTM request message from the source base station/base station-CU/base station-DU (e.g., handover request or a distinct XnAP/F1AP message) may include at least one of: target candidate cell ID, LTM configuration ID of the candidate cell, LTM configuration ID mapping list, CSI resource configuration, and source/target CSI report configuration. The target/candidate base station/base station-CU may transmit a UE CONTEXT SETUP REQUEST message to a candidate gNB-DU associated with or connected to that gNB-CU. The corresponding message may include at least one piece of information received from the source base station/base station-CU. The candidate gNB-DU may transmit a UE CONTEXT SETUP RESPONSE message to the target/candidate base station/base station-CU. The corresponding message may include a lower layer RRC configuration for the target candidate cell (e.g., TCI state configuration, RACH configuration, and/or CSI report configuration). The target/candidate base station/base station-CU may provide a target/candidate configuration to the source base station/base station-CU. The corresponding target/candidate configuration may include at least one of: a reference configuration associated with the target/candidate cell, a CSI resource configuration, and a lower layer RRC configuration.

For another example, the source/serving base station/base station-CU may separately distinguish and indicate a conditional LTM request to the target/candidate base station/base station-CU.

For another example, upon receiving a conditional LTM configuration, the UE may start an evaluation of the execution condition. For example, it may perform an evaluation of the execution condition for conditional LTM of the serving cell included in the corresponding LTM configuration. If LTM is executed according to the reception of a base station's LTM cell switch MAC CE, the corresponding UE may stop/suspend the evaluation of the conditional LTM execution condition of the corresponding serving cell. For example, the UE may receive an LTM cell switch MAC CE from the base station and execute an LTM cell switch. Accordingly, it may execute a cell change/handover (reconfigurationwithsync) to a cell different from the source cell. The UE may stop/suspend the evaluation of any/specific LTM execution condition for all LTM candidate configurations (if they exist). If the corresponding LTM execution condition was performed based on L1 measurement, the RRC layer of the UE may instruct the lower layers to stop/suspend the evaluation of the LTM cell switch condition.

For another example, upon receiving a conditional LTM configuration, the UE may start an evaluation of the execution condition. If any L3 handover is executed, the corresponding UE may stop/suspend the evaluation of the conditional LTM execution condition. For example, when the UE receives an RRC reconfiguration message indicating a handover (e.g., an RRC reconfiguration message including reconfigurationwithsync) and executes a cell change/handover (reconfigurationwithsync) to a cell different from the source cell, the UE may stop/suspend the evaluation of any/specific LTM execution condition for all LTM candidate configurations (if they exist). If the corresponding LTM execution condition was performed based on L1 measurement, the RRC layer of the UE may instruct the lower layers to stop/suspend the evaluation of the LTM cell switch condition.

For another example, signaling information or indication information for starting/restarting/resuming the evaluation of a stopped/suspended execution condition may be indicated from the (serving) base station to the UE. The corresponding signaling/indication information may be indicated using one of an RRC message/MAC-CE/DCI. In another example, the conditional LTM configuration may include a conditional LTM candidate configuration generated by a candidate/target base station.

## Second Disclosure

The network may configure the UE with one or more conditional LTM candidate configurations within a conditional LTM configuration information element. The corresponding conditional LTM configuration may be associated with either the MCG or the SCG. The UE may add/modify/release/store the received conditional LTM candidate configuration in the UE.

For example, when the UE receives a conditional LTM candidate configuration, it may maintain the corresponding conditional LTM configuration information element. When the UE receives a conditional LTM candidate configuration, it may maintain a specific UE variable associated with the corresponding conditional LTM configuration. The specific UE variable associated with the conditional LTM configuration may be at least one of: index information for indicating/determining RLC reset in the serving cell, index information for indicating/determining PDCP reset (and/or security key update) in the serving cell, index information for indicating/determining UE-based TA measurement in the serving cell, a reference configuration, and a security key configuration.

If the received conditional LTM configuration includes index information for indicating/determining RLC reset in the serving cell, or if the UE variable for the index information for indicating/determining RLC reset in the current serving cell includes index information for indicating/determining RLC reset in the serving cell, the value of the index information for indicating/determining RLC reset in the serving cell within the UE variable for the corresponding serving cell may be replaced with (e.g., updated with) the received index information for indicating/determining RLC reset in the serving cell. Otherwise, the received index information for indicating/determining RLC reset in the serving cell may be stored/added within the UE variable for the index information for indicating/determining RLC reset in the corresponding serving cell.

If the received conditional LTM configuration includes index information for indicating/determining PDCP reset (and/or security key update) in the serving cell, or if the UE variable for the index information for indicating/determining PDCP reset (and/or security key update) in the serving cell in the current serving cell includes index information for indicating/determining PDCP reset (and/or security key update) in the serving cell, the value of the index information for indicating/determining PDCP reset (and/or security key update) in the serving cell within the UE variable for the corresponding serving cell may be replaced with the received index information for indicating/determining PDCP reset (and/or security key update) in the serving cell. Otherwise, the received index information for indicating/determining PDCP reset (and/or security key update) in the serving cell may be stored/added within the UE variable for the index information for indicating/determining PDCP reset (and/or security key update) in the corresponding serving cell.

If the received conditional LTM configuration includes index information for indicating/determining UE-based TA measurement in the serving cell, or if the UE variable for the index information for indicating/determining UE-based TA measurement in the serving cell in the current serving cell includes index information for indicating/determining UE-based TA measurement in the serving cell, the value of the index information for indicating/determining UE-based TA reset in the serving cell within the UE variable for the corresponding serving cell may be replaced with the received index information for indicating/determining UE-based TA measurement in the serving cell. Otherwise, the received index information for indicating/determining UE-based TA measurement in the serving cell may be stored/added within the UE variable for the index information for indicating/determining UE-based TA measurement in the corresponding serving cell.

If the received conditional LTM configuration includes list information for conditional LTM candidate configurations to be added/modified (e.g., conditional-ltm-candidate-AddModList/ltm-candidate-AddModList), the UE may perform addition/modification of the conditional LTM configuration. For example, for each piece of information for identifying a conditional LTM candidate/candidate configuration/candidate cell included in the list information for conditional LTM candidate configurations to be added/modified (e.g., conditional-ltm-candidate-AddModList/ltm-candidate-AddModList), if the current UE configuration includes a conditional LTM candidate configuration with a value for the information for identifying the conditional LTM candidate/candidate configuration/candidate cell, the UE reconfigures the corresponding UE's conditional LTM candidate configuration with the received conditional LTM candidate configuration. Otherwise, it adds the received conditional LTM candidate configuration.

If the received conditional LTM candidate configuration with the value for the information for identifying each conditional LTM candidate/candidate configuration/candidate cell includes index information for indicating/determining UE-based TA measurement, or if the value of the index information for indicating/determining UE-based TA measurement is the same as the value of the received index information for indicating/determining UE-based TA measurement in the serving cell within the UE variable for the index information for indicating/determining UE-based TA measurement in the serving cell, the UE may inform the lower layer that the UE is configured with UE-based TA measurement for the corresponding conditional LTM candidate configuration. Otherwise, it may inform that the UE is not configured with UE-based TA measurement for the corresponding conditional LTM candidate configuration.

If the received conditional LTM configuration includes list information for conditional LTM candidate configurations to be released (e.g., conditional-ltm-candidate-ReleaseList), the UE may perform the release of the conditional LTM configuration.

The UE may reconfigure itself according to all other fields in the received conditional LTM configuration.

In this way, for specific UE variables associated with the corresponding conditional LTM configuration, the UE may replace/add/store the value of the corresponding UE variable based only on the received conditional LTM configuration IE (information element), and for other fields, it may reconfigure the UE according to the received configuration.

For another example, when the UE receives a conditional LTM candidate configuration, it may maintain a UE variable for storing/adding/modifying/releasing the corresponding conditional LTM configuration information element. Hereinafter, for convenience of explanation, the corresponding UE variable is referred to as a conditional LTM configuration UE variable.

For each piece of information for identifying a conditional LTM candidate/candidate configuration/candidate cell received from the base station in the list information for conditional LTM candidate configurations to be added/modified (e.g., conditional-ltm-candidate-AddModList/ltm-candidate-AddModList), if there is matching information for identifying the conditional LTM candidate/candidate configuration/candidate cell in the list information for conditional LTM candidate configurations to be added/modified within the conditional LTM UE variable, or if an entry in the list information for conditional LTM candidate configurations to be added/modified (e.g., conditional-ltm-candidate-AddModList/ltm-candidate-AddModList) includes a conditional LTM execution condition (or trigger condition), the conditional LTM execution condition is replaced with the conditional LTM execution condition in the conditional LTM configuration UE variable with the received value for the information for identifying the corresponding conditional LTM candidate/candidate configuration/candidate cell. Otherwise, a new entry is added in the conditional LTM execution condition within the conditional LTM configuration UE variable with the received value for the information for identifying the corresponding conditional LTM candidate/candidate configuration/candidate cell.

For each piece of information for identifying a conditional LTM candidate/candidate configuration/candidate cell received from the base station in the list information for conditional LTM candidate configurations to be added/modified (e.g., conditional-ltm-candidate-AddModList/ltm-candidate-AddModList), if an entry in the list information for conditional LTM candidate configurations to be added/modified (e.g., conditional-ltm-candidate-AddModList) includes information for indicating the corresponding conditional LTM candidate configuration via an RRC reconfiguration message/container/information element (e.g., conditional-LTM-candidateConfig/LTM-candidateConfig), the information for indicating the conditional LTM candidate configuration in the conditional LTM configuration UE variable is replaced with the received value for the information for identifying the corresponding conditional LTM candidate/candidate configuration/candidate cell (e.g., conditional-LTM-candidateConfig/LTM-candidateConfig). Otherwise, for the information for identifying the corresponding conditional LTM candidate/candidate configuration/candidate cell, a new entry is added in the conditional LTM configuration UE variable.

If the received conditional LTM configuration includes index information for indicating/determining RLC reset in the serving cell, or if the UE variable for the index information for indicating/determining RLC reset in the current serving cell includes index information for indicating/determining RLC reset in the serving cell, the value of the index information for indicating/determining RLC reset in the serving cell within the UE variable for the corresponding serving cell may be replaced with (e.g., updated with) the received index information for indicating/determining RLC reset in the serving cell. Otherwise, the received index information for indicating/determining RLC reset in the serving cell may be stored/added within the UE variable for the index information for indicating/determining RLC reset in the corresponding serving cell.

If the received conditional LTM configuration includes index information for instructing/determining a PDCP reset (and/or security key update) in the serving cell, or if the UE variable for the index information for instructing/determining a PDCP reset (and/or security key update) in the current serving cell includes index information for instructing/determining a PDCP reset in the serving cell, the value of the index information for instructing/determining a PDCP reset (and/or security key update) in the serving cell within the UE variable for the index information for instructing/determining a PDCP reset (and/or security key update) in the corresponding serving cell may be replaced with (e.g., updated with) the received index information for instructing/determining a PDCP reset (and/or security key update) in the serving cell. Otherwise, the received index information for instructing/determining a PDCP reset (and/or security key update) in the serving cell may be stored/added within the UE variable for the index information for instructing/determining a PDCP reset (and/or security key update) in the corresponding serving cell.

If the received conditional LTM configuration includes index information for instructing/determining a UE-based TA measurement in the serving cell, or if the UE variable for the index information for instructing/determining a UE-based TA measurement in the current serving cell includes index information for instructing/determining a UE-based TA measurement in the serving cell, the value of the index information for instructing/determining a TA reset in the serving cell within the UE variable for the index information for instructing/determining a UE-based TA measurement in the corresponding serving cell may be replaced with (e.g., updated with) the received index information for instructing/determining a UE-based TA measurement in the serving cell. Otherwise, the received index information for instructing/determining a UE-based TA measurement in the serving cell may be stored/added within the UE variable for the index information for instructing/determining a UE-based TA measurement in the corresponding serving cell.

To support conditional LTM, it may be necessary to specifically determine a method for configuring a conditional LTM execution condition. The conditional LTM execution condition (e.g., conditional-ltm-Execution-condition) may be included in a conditional LTM candidate (e.g., conditional-ltm-candidate/ltm-candidate) information element. For example, it may be included along with a conditional LTM candidate identifier (e.g., conditional-ltm-candidate-ID/ltm-candidate-ID) and a conditional LTM candidate configuration (e.g., conditional-ltm-CandidateConfig/ltm-CandidateConfig) information element within the conditional LTM candidate information element, such that the corresponding conditional LTM candidate configuration is executed/applied when the corresponding execution condition is met or satisfied. The conditional LTM execution condition may be configured in association with an LTM CSI measurement configuration for conditional LTM and/or an LTM CSI reporting configuration for LTM (or LTM CSI report configuration) to simplify the corresponding configuration and instruct it to the UE.

For example, if the execution condition in conditional LTM is to be evaluated based on L3 measurements, the execution condition included in the conditional LTM candidate configuration may be configured in association with any information included within a measurement configuration information element (measconfig: The IE MeasConfig specifies measurements to be performed by the UE, and covers intra-frequency, inter-frequency and inter-RAT mobility as well as configuration of measurement gaps) that specifies the L3 measurements performed by the UE, for example, a measurement identity (meas ID: The IE MeasId is used to identify a measurement configuration, i.e., linking of a measurement object and a reporting configuration).

For another example, if L3 measurements are to be used together with L1 measurements when evaluating the execution condition in conditional LTM, the execution condition included in the conditional LTM candidate configuration may be configured in association with a measurement identity included within the measurement configuration (measconfig).

For another example, if L1 measurements are to be used when evaluating the execution condition in conditional LTM, the execution condition included in the conditional LTM candidate configuration may be configured not to be associated with a measurement identity included within the measurement configuration (measconfig).

For another example, if L1 measurements are to be used when evaluating the execution condition in conditional LTM, the execution condition included in the conditional LTM candidate configuration may be configured in association with a corresponding measurement identity included within a CSI measurement configuration information element that specifies the L1 measurements performed by the UE. For example, the CSI measurement configuration information element specifying the L1 measurements may represent conditional LTM CSI resource configuration information. The CSI measurement configuration information element specifying the L1 measurements may be associated with an identifier (e.g., conditional-LTM-CSI-Resource-Config-ID/LTM-CSI-Resource-Config-ID) included within a conditional LTM CSI resource configuration/configuration list (e.g., conditional-LTM-CSI-Resource-Configuration/LTM-CSI-Resource-Configuration). The CSI measurement configuration information element specifying the L1 measurements or the conditional LTM CSI resource configuration information may be included within a conditional LTM configuration (e.g., conditional-LTM-Config/LTM-Config) or a conditional LTM candidate (e.g., conditional-ltm-candidate/ltm-candidate) information element.

For another example, if L1 measurements are to be used when evaluating the execution condition in conditional LTM, the execution condition included in the conditional LTM candidate configuration may be configured by associating an identifier for identifying the corresponding measurement resource configuration (e.g., ltm-CSI-ResourceConfigId or conditional ltm-CSI-ResourceConfigId) included within an LTM CSI resource configuration (e.g., LTM-CSI-Resource-Config: The IE LTM-CSI-ResourceConfig defines a group of one or more CSI resources for one or more LTM candidate configurations/conditional LTM candidate configuration.)/conditional-CSI-report-config (e.g., LTM-CSI-report-config: The IE LTM-CSI-ReportConfig is used to configure report on the cell in which the LTM-CSI-ReportConfig is included or to configure execution condition in conditional LTM) (performed by the UE) with an identifier for identifying the corresponding report configuration. For example, it may be configured in association with an LTM CSI report configuration identity (e.g.,

ltm-CSI-ReportConfigId) or a conditional LTM CSI report configuration identity (e.g., conditional ltm-CSI-ReportConfigId).

For another example, if L1 measurements and/or L3 measurements are to be used when evaluating the execution condition in conditional LTM, the execution condition included in the conditional LTM candidate configuration may be selectively configured in association with a measurement identity included within the measurement configuration (measconfig) and/or an identifier for identifying a measurement resource configuration (e.g., ltm-CSI-ResourceConfigId or conditional ltm-CSI-ResourceConfigId), an LTM CSI report configuration identity (e.g., ltm-CSI-ReportConfigId), or a conditional LTM CSI report configuration identity (e.g., conditional ltm-CSI-ReportConfigId). For example, the execution condition for conditional LTM may be configured by selecting only one of either L1 measurement or L3 measurement.

For another example, the base station may instruct/configure LTM L1 measurement/reporting for the UE. If information for instructing/configuring LTM L1 measurement/reporting for the UE includes at least one of information for identifying an LTM L1 measurement/measurement configuration/measurement resource/measurement resource configuration, and information for identifying an LTM L1 report/report configuration, the conditional LTM execution condition may be associated with at least one of information for identifying the LTM L1 measurement/measurement configuration/measurement resource/measurement resource configuration and information for identifying the LTM L1 report/report configuration.

For another example, the base station may instruct/configure conditional LTM L1 measurement/reporting for the UE. If information for instructing/configuring conditional LTM L1 measurement/reporting for the UE includes at least one of information for identifying a conditional LTM L1 measurement/measurement configuration/measurement resource/measurement resource configuration, and information for identifying a conditional LTM L1 report/report configuration, the conditional LTM execution condition may be associated with at least one of information for identifying the conditional LTM L1 measurement/measurement configuration/measurement resource/measurement resource configuration and information for identifying the conditional LTM L1 report/report configuration.

For another example, an LTM L1 measurement (result) report/reporting may be indicated to the base station via L1 signaling. And/or, an LTM L1 measurement (result) report/reporting may be indicated to the base station via L2 signaling (e.g., MAC CE). The LTM L1 report configuration information via L1 signaling and/or L2 signaling may include report type information as sub-configuration information. The corresponding report type information may include at least one of a periodic report/report configuration, an event-triggered report/report configuration, and a conditional trigger execution condition/configuration. The conditional trigger execution condition/configuration may include LTM event ID (or L1 event ID or conditional event ID) information. The corresponding LTM event ID may be associated with/mapped to one or more of event LTM2, event LTM3, event LTM4, and event LTM5. (Or it may be selected from among event LTM2, event LTM3, event LTM4, and event LTM5.) The conditional trigger execution condition/configuration may include reference signal (RS) type information.

The conditional trigger execution condition/configuration may be associated with L1 measurement. The L1 measurement information may include CSI resource configuration information. Furthermore, it may include the corresponding RS type information. For example, one RS type may be selected from among an SS/PBCH block and CSI-RS.

For another example, the conditional LTM execution condition may be included as a sub-information element of a conditional LTM candidate information element. For example, the conditional LTM candidate information element may include a conditional LTM candidate ID, a conditional LTM execution condition, and a conditional LTM candidate configuration information element as sub-information elements, so that the corresponding conditional LTM candidate configuration is executed when the corresponding execution condition is met/satisfied.

For another example, the conditional LTM execution condition may be configured in association with an L1 measurement event (e.g., event LTM2, event LTM3, event LTM4, or event LTM5).

For another example, an LTM measurement resource configuration (or conditional LTM measurement resource configuration) may be included in an LTM configuration (or conditional LTM configuration). For example, the corresponding measurement resource configuration may be provided by including an LTM CSI resource configuration/configuration list (or conditional LTM CSI resource configuration/configuration list) as a sub-information element within the LTM configuration (conditional LTM configuration). The LTM CSI resource configuration/configuration list (or conditional LTM CSI resource configuration/configuration list) may be configured in association with an L1 measurement event (e.g., event LTM2, event LTM3, event LTM4, or event LTM5). For example, the LTM CSI resource configuration (or conditional LTM CSI resource configuration) may include at least one of an LTM CSI resource configuration identity (or conditional LTM CSI resource configuration identity), an LTM-CSI-SSB-resource set, an LTM-CSI-RS-resource set, and an LTM event ID (or L1 event ID or conditional event ID). The LTM-CSI-SSB-resource set (or LTM-CSI-RS-resource set) may include one or more LTM-CSI-SSB resource lists (SSB index) (or LTM-CSI-RS resource lists (CSI-RS Resource Indicator, CRI)).

For another example, an L1 measurement event (e.g., event LTM2, event LTM3, event LTM4, or event LTM5) may be associated within an LTM CSI report configuration/configuration list (or conditional LTM CSI report configuration/configuration list). The conditional LTM execution condition may be associated with an L1 measurement event (e.g., event LTM2, event LTM3, event LTM4, or event LTM5) through the LTM CSI report configuration/configuration list (or conditional LTM CSI report configuration/configuration list). For example, the LTM CSI report configuration/configuration list (or conditional LTM CSI report configuration/configuration list) may be included within a serving cell configuration (ServingCellConfig: The IE ServingCellConfig is used to configure (add or modify) the UE with a serving cell, which may be the SpCell or an SCell of an MCG or SCG). For example, it may be included as ltm-CSI-ReportConfig information in CSI-MeasConfig included in ServingCellConfig. Through this, the Conditional LTM execution condition of the serving cell may be associated with an L1 measurement event (e.g., event LTM2, event LTM3, event LTM4, and/or event LTM5). The LTM CSI report configuration (or conditional LTM CSI reporting configuration) may include at least one of an LTM CSI report configuration identity (or conditional LTM CSI report configuration identity), an LTM report configuration type (or conditional LTM report configuration type), an LTM report content (or conditional LTM report content), and an LTM event ID (or L1 event ID or conditional event ID). One CSI report configuration may be associated with/mapped to one CSI resource configuration (a set of RS resources) via an LTM-CSI-resource configuration identity.

For another example, the LTM report configuration type (or conditional LTM report configuration type) may include a Conditional LTM execution condition as a sub-information element. The conditional LTM execution condition may include an LTM event ID (or L1 event ID or conditional LTM event ID) as a sub-information element.

For another example, the execution condition of the conditional LTM candidate configuration may be configured for the UE through an L1 measurement-based event. When evaluating the conditional LTM execution condition, an L1 measurement-based event that uses beam-level measurements may be defined and used/utilized as conditional event information. For example, an event-triggered event included in the LTM report configuration type may be associated with L1 measurement-based event information as follows. (Or may include at least one of the following)

- Event LTM2: Beam of serving cell becomes worse than an absolute threshold.
- Event LTM3: Beam of candidate cell becomes an amount of offset better than the beam of the serving cell.
- Event LTM4: Beam of serving cell becomes better than an absolute threshold.
- Event LTM5: Beam of serving cell becomes worse than absolute threshold1 AND beam of candidate cell becomes better than another absolute threshold2.

For another example, when evaluating the conditional LTM execution condition, an L1 measurement-based event that uses beam-level measurements may be defined and used/utilized as conditional event information. The conditional LTM execution condition may be associated with the following conditional L1 measurement-based event information. (Or the event included in the conditional LTM execution condition may include at least one of the following)

- conditional Event LTM2: Beam of serving cell becomes worse than an absolute threshold.
- conditional Event LTM3: Beam of candidate cell becomes an amount of offset better than the beam of the serving cell.
- conditional Event LTM4: Beam of serving cell becomes better than an absolute threshold.
- conditional Event LTM5: Beam of serving cell becomes worse than absolute threshold1 AND beam of candidate cell becomes better than another absolute threshold2.

For another example, the conditional LTM configuration may include an L1 measurement resource configuration. The corresponding L1 measurement resource configuration may support both SSB and CSI-RS. For event LTM3 (and/or conditional event LTM3) and event LTM5 (and/or conditional event LTM5) included in the conditional LTM execution condition, the same RS type may be used for both the serving cell and the candidate cell.

For another example, for the evaluation of the conditional LTM execution condition in the serving cell, a beam corresponding to a Transmission Configuration Indicator (TCI) state indicated by the base station (the current beam) may be used. The current beam indicates the current serving beam indicated by the TCI state within the most recent scheduling DCI used for the current transmission. For example, if a plurality of TCI states are activated, the DCI may select one TCI state among the activated ones. If only one TCI state is activated, the corresponding activated TCI state may be selected.

For another example, for the evaluation of the conditional LTM execution condition in a candidate cell, any beam within the candidate RS configuration may be used. For example, in evaluating the LTM execution condition, for an LTM candidate cell indicated by the LTM candidate configuration, all beams associated with an LTM-CSI-ResourceConfigId that is associated with an LTM-CSI-ReportConfigId may be considered as applicable beams. The RS/resource/resource set for the beam of the candidate cell may be configured via RRC. Alternatively, it may be implicitly derived from the Quasi-Co-Location (QCL) RS/resource/resource set of the activated TCI state(s). Alternatively, it may be implicitly derived from the QCL RS/resource/resource set of the TCI state(s) within a configured subset of the TCI state list configured by RRC.

For another example, for conditional LTM, the conditional LTM may be executed when an L1 measurement-based event information and an L3 measurement-based event are simultaneously met/satisfied. The UE evaluates the conditions of the configured candidate/target cell/serving cell. If one of the candidate/target cells/special cells meets/satisfies the corresponding execution condition, the UE may apply the conditional LTM configuration associated with the corresponding candidate/target cell/special cell.

For another example, only a single RS type may be supported for the evaluation of the execution condition of a single conditional LTM candidate cell. This may simplify the evaluation of the candidate cell execution condition.

For another example, at least one RS type may be supported for the evaluation of the execution condition of a single conditional LTM candidate cell. This enables for the evaluation of the candidate cell's execution condition in consideration of LTM characteristics. For example, at least one RS type among an SS/PBCH block and CSI-RS may be supported.

For another example, if an LTM CSI report configuration (or conditional LTM CSI reporting configuration) is used in association with the execution condition for conditional LTM, an L1 report (e.g., CSI report) shall not be triggered or transmitted when the execution condition included in the corresponding report configuration is met. When the corresponding execution condition is met/satisfied, the UE shall execute a conditional LTM cell switch. Therefore, if the UE prioritizes sending a CSI report to the source/serving base station, an interruption may occur. To prevent this, for an LTM CSI resource configuration (or its corresponding UE variable) and/or an LTM CSI report configuration (or its corresponding UE variable) configured/stored in the UE, an evaluation for the report/reporting criteria may be performed, except when the LTM-CSI-report configuration (or the LTM-CSI-report type included within the LTM-CSI-report configuration) is an LTM execution condition. The base station may indicate to the UE that a specific LTM-CSI-report configuration is for a conditional LTM candidate cell associated with a conditional LTM execution condition. The base station may indicate to the UE that another LTM-CSI-report configuration is for an LTM candidate cell not associated with a conditional LTM execution condition. The base station may configure the LTM-CSI-report configuration to include information for identifying an LTM candidate information element associated with a conditional LTM execution condition (conditional-ltm-candidateID/ltm-candidateID), thereby indicating that measurement and event evaluation for L1/L2 measurement report triggering are required within the corresponding LTM-CSI-report configuration. If the LTM-CSI-report configuration does not include information for identifying an LTM candidate information element associated with it (conditional-ltm-candidateID/ltm-candidateID), the UE may consider that measurement and event evaluation for L1/L2 measurement report triggering are not required for the corresponding LTM candidate cell. For example, if the LTM-CSI-report configuration (or the LTM-CSI-report type included within the LTM-CSI-report configuration) is a conditional LTM execution condition, the UE may execute conditional LTM when any event (or all events) included in the corresponding conditional LTM execution condition is triggered/met/satisfied. The UE may be configured not to transmit a MAC CE including the corresponding event-triggered L1-measurements/measurement results to the base station. If the LTM-CSI-report configuration (or the LTM-CSI-report type included within the LTM-CSI-report configuration) is event-triggered and any event (or all events) included in the corresponding event-triggered configuration is triggered/met/satisfied, the UE may execute conditional LTM. The UE may be configured not to transmit a MAC CE including the corresponding event-triggered L1-measurements/measurement results to the base station.

For example, it may be configured not to initiate MAC CE reporting including the corresponding event-triggered L1-measurements/measurement results. Alternatively, the UE may execute the conditional LTM as the execution condition is met or satisfied, thereby resetting the corresponding MAC entity. As the event-triggered L1-measurement reporting is released or removed, the MAC CE reporting including the corresponding event-triggered L1-measurements/measurement results may not be performed. Alternatively, the base station may configure the corresponding LTM-CSI-report configuration to instruct the UE not to initiate MAC CE reporting including the corresponding event-triggered L1-measurements/measurement results for a specific candidate cell.

If the LTM-CSI-report configuration (or the LTM-CSI-report type included within the LTM-CSI-report configuration) is event-triggered, the UE may transmit a MAC CE including the corresponding event-triggered L1-measurements/measurement results to the base station when any event (or all events) included in the corresponding conditional LTM execution condition is triggered/met/satisfied. For example, it may initiate MAC CE reporting including the corresponding event-triggered L1-measurements/measurement results.

**Third Disclosure**

Conditional LTM Candidate Cell Selection during Radio Link Failure

An RRC connected state UE may initiate an RRC re-establishment procedure to maintain the RRC connection when any failure condition occurs (e.g., radio link failure, reconfiguration failure, and/or integrity check failure...). For a UE configured with a conditional LTM configuration, it may be desirable to utilize a cell from the corresponding conditional LTM configuration during the RRC re-establishment process.

For example, an RRC parameter may be defined to instruct the UE to execute a cell switch to a conditional LTM candidate cell. This may be used to instruct the UE to perform a conditional LTM cell switch (or conditional LTM execution/reconfiguration). The UE may be configured to perform a conditional LTM cell switch (or conditional LTM execution/reconfiguration) if the selected cell is a target candidate cell and it is the first cell selection after failure (while the T311 timer is running after initiating the RRC re-establishment procedure). This information may be included as a sub-information element in the conditional LTM configuration.

For this information, indication information (attemptLTM-Switch) included in a typical LTM configuration (LTM-config) may be reused. Alternatively, new indication information (e.g., attemptCondLTM-Switch), separate from the indication information (attemptLTM-Switch) included in the typical LTM configuration (LTM-config) may be additionally defined and used.

If the selected cell was triggered by the detection of a radio link failure of the MCG, or was triggered by a ReconfigurationWithSync failure of the MCG (e.g., T304 timer expiry) for an LTM cell switch procedure (based on LTM Cell switch MAC CE), or was triggered by a ReconfigurationWithSync failure of the MCG (e.g., T304 timer expiry) for a conditional LTM cell switch procedure, and/or

> if the aforementioned RRC parameter for instructing execution of a conditional LTM cell switch (or conditional LTM execution/reconfiguration) is configured, and/or
> if the selected cell is one of the conditional LTM candidate cells included in a conditional LTM candidate/candidate cell/candidate configuration information element included in a conditional LTM configuration associated with the MCG (and/or if the selected cell is one of the conditional LTM candidate cells included in a conditional LTM UE variable associated with the MCG, and/or if the selected cell is one of the LTM candidate cells included in an LTM configuration associated with the MCG, and/or if the selected cell is one of the LTM candidate cells included in an LTM UE variable associated with the MCG),
> the UE may (e.g., shall) execute an LTM cell switch to the selected conditional LTM candidate cell. (Or, the UE may execute a conditional LTM cell switch to the selected conditional LTM candidate cell.)

If the UE supports an RLF (radio link failure)-report for LTM (and/or for conditional LTM), the corresponding variable may be set within the RLF-report UE variable (VarRLF-Report). To this end, the RLF-report may include candidate target cell information (cell identifier, global cell identity, and/or physical cell identity) included in the LTM configuration/-conditional LTM configuration for LTM/conditional LTM based recovery while T311 is running.

When executing conditional LTM, the UE may perform the following operations.

For example, when the UE initiates an RRC connection re-establishment procedure, the UE starts a T311 timer. If RRC reconfiguration is applied due to conditional LTM when performing cell selection while the T311 timer is running (or if the UE executes an LTM cell switch to the selected conditional LTM candidate cell), the UE may maintain all or some entries in the UE variable associated with the corresponding conditional LTM without releasing or removing them. For example, the UE may maintain the UE variables for index information for instructing or determining RLC reset in the serving cell, index information for instructing or determining PDCP reset (and/or security key update) in the serving cell, and index information for instructing or determining UE-based TA measurement in the serving cell without releasing or removing them. The UE may maintain the conditional LTM configuration and AS security configuration without releasing or removing them. The UE may maintain, for each signaling radio bearer (SRB)/data radio bearer (DRB) in the current UE configuration, the associated PDCP and SDAP entities, their state variables, buffers and timers.

For another example, when the UE initiates an RRC connection re-establishment procedure, the UE starts a T311 timer. If RRC reconfiguration is applied due to conditional LTM when performing cell selection while the T311 timer is running (or if the UE executes an LTM cell switch to the selected conditional LTM candidate cell), the UE may maintain all or some entries within the corresponding conditional LTM configuration UE variable without releasing/removing them. The UE may maintain the Access Stratum (AS) security configuration without releasing/removing it. The UE may maintain, for each SRB/DRB in the current conditional LTM configuration UE variable, the associated PDCP and SDAP entities, their state variables, buffers and timers.

For another example, if an RRC reconfiguration message was received via SRB1 within an nr-SCG in a multi-rat dual connectivity (MRDC)-secondary cell group ((UE in NR-DC, mrdc-SecondaryCellGroup was received in RRCReconfiguration), and if the RRC reconfiguration was applied due to the execution of a conditional LTM cell switch (and/or the satisfaction/meeting of the corresponding execution condition), the UE may submit the RRCReconfigurationComplete message via SRB1 embedded in an NR RRC message ULInformationTransferMRDC.

## UE-based conditional LTM and Network-based LTM/L3-HO

For a UE, a conditional LTM configuration, in which the UE evaluates an execution condition to execute an LTM cell switch, and an LTM configuration, in which the network/base station decides on the LTM cell switch execution and transmits an LTM cell switch MAC CE to the UE to execute a cell switch, may be configured simultaneously.

For example, if the UE receives an LTM cell switch command (Cell Switch MAC CE) before any conditional LTM execution condition is met or satisfied, the UE may execute the LTM cell switch. For example, the UE may switch to the target cell and apply the configuration indicated by a target/candidate configuration ID that indicates the candidate configuration index of the target cell.

For another example, to support a subsequent LTM and/or to support a subsequent conditional LTM, the UE may be configured to maintain any LTM UE variables and/or any conditional LTM UE variables (e.g., conditional LTM candidate configuration and execution condition).

For another example, the base station may, when instructing (or after instructing) an LTM cell switch command (Cell Switch MAC CE) to the UE, release/remove/modify the LTM configuration and/or conditional LTM configuration (and/or the corresponding UE variables) stored in the UE. For example, this may be performed by adding the corresponding indication information within the said MAC CE. This may be performed by defining a MAC CE having a Logical Channel ID (LCID) value different from a conventional MAC CE. Alternatively, it may be performed by setting the value of an arbitrary field included in a typical MAC CE to a specific value to give the instruction. Alternatively, it may be performed by setting the LTM configuration and/or conditional LTM configuration included in a subsequent RRC reconfiguration message to release to give the instruction.

For another example, if the UE receives an L3 handover command (Reconfiguration WithSync or an RRC reconfiguration message including Reconfiguration WithSync) before any conditional LTM execution condition is met/satisfied, the UE may perform an L3 handover. For example, it may apply the configuration indicated by the corresponding RRC reconfiguration message.

For another example, to support a subsequent LTM and/or to support a subsequent conditional LTM, the UE may be configured to maintain any LTM UE variables and/or any conditional LTM UE variables (e.g., conditional LTM candidate configuration and execution condition).

For another example, the base station may, when instructing an L3 handover command (Reconfiguration WithSync or an RRC reconfiguration message including Reconfiguration WithSync) (or an RRC reconfiguration message including the corresponding handover command) to the UE, release/remove/modify the LTM configuration and/or conditional LTM configuration (and/or the corresponding UE variables) stored in the UE. For example, this may be performed by setting the LTM configuration and/or conditional LTM configuration included in the corresponding RRC reconfiguration message to release to give the instruction. To this end, the conditional LTM information element included as a sub-information element in the RRC reconfiguration message may be configured to be set to either setup or release.

For another example, during conditional LTM execution, the UE may not monitor the source cell. This may prevent the reception of an LTM cell switch command (Cell Switch MAC CE) and/or an L3 handover command (ReconfigurationWithSync or an RRC reconfiguration message including ReconfigurationWithSync) from the network during conditional LTM execution.

For another example, while the UE is executing a network-based normal LTM, for example, from when it receives an LTM cell switch MAC CE that triggers a cell switch by including the target configuration ID indicating the candidate configuration index of the target cell, a beam indicated by a TCI state, and a timing advance for the target cell from the base station (or from the reception thereof), or from when the UE switches to the target cell (or from when it switches), or from when the UE applies the candidate configuration (or from the application thereof), and/or until the LTM cell switch procedure is completed, or until an RRC reconfiguration complete message is transmitted to the target cell, or if the UE performs a random access procedure, until the random access procedure is successfully completed and the UE considers the LTM cell switch execution to be successfully completed, or for RACH-less LTM, until the UE determines/confirms that the network has successfully received the UE's first uplink data (or until the UE considers the LTM cell switch to be successfully executed at this time), the UE may suspend/stop the evaluation of the execution condition for the conditional LTM.

For another example, while the UE is executing a network-based LTM, the UE may stop monitoring the source cell.

For another example, during conditional LTM execution, for example, while switching to a target cell and/or applying a conditional LTM candidate configuration because an arbitrary conditional LTM execution condition is met, the corresponding UE may execute the conditional LTM without performing a random access procedure. For example, RACH-less conditional LTM may be performed. When the UE receives a conditional LTM configuration, the UE starts the evaluation of the execution condition. After receiving the conditional LTM configuration, during the evaluation of the conditional LTM execution condition, or before executing the conditional LTM, the UE may perform early synchronization as instructed by the base station. For example, after starting the evaluation of the execution condition (or simultaneously with the start), the UE may perform early synchronization before deciding to switch to a target cell and applying the conditional LTM candidate configuration. After starting the evaluation of the execution condition (or simultaneously with the start) and before deciding to switch to a target cell and applying the conditional LTM candidate configuration, the UE may be triggered by the base station (e.g., by receiving a TCI state activation/deactivation MAC CE for the conditional LTM candidate cell(s) and/or by receiving a DCI to indicate the current beam) to perform downlink synchronization with the conditional LTM candidate cell. After starting the evaluation of the execution condition (or simultaneously with the start) and before deciding to switch to a target cell and applying the conditional LTM candidate configuration, the UE, if configured, may perform uplink synchronization by using UE-based TA measurement or by being triggered by the base station (e.g., by a PDCCH order from the source cell) to transmit a preamble to the candidate cell.

For another example, the (source/serving/target/candidate) base station may not include RLC re-establishment indication information (reestablishRLC) in the RLC bearer configuration (RLC-BearerConfig) of the information for instructing the corresponding conditional LTM candidate configuration (e.g., conditional-LTM-candidate-config) via an RRC reconfiguration message/container/information element included in the conditional LTM configuration (or included in the RRC container/message/information element for a conditional LTM candidate (e.g., conditional-LTM-candidate)). When instructing a typical L3 handover, the base station may, for example, indicate whether to perform RLC re-establishment of the corresponding RLC entity via RLC re-establishment indication information (reestablishRLC) in the RLC bearer configuration (RLC-BearerConfig) included in an RRC reconfiguration message that includes a Reconfiguration WithSync.

For another example, the (source/serving/target/candidate) base station may not include PDCP re-establishment indication information (reestablishPDCP)/PDCP recovery indication information (recoveryPDCP) in the radio bearer configuration (RadioBearerConfig) or the DRB-ToAddMod included in the radio bearer configuration of the information for instructing the corresponding conditional LTM candidate configuration (e.g., conditional-LTM-candidate-config) via an RRC reconfiguration message/container/information element included in the conditional LTM configuration (or included in the RRC container/message/information element for a conditional LTM candidate (e.g., conditional-LTM-candidate)). When instructing a typical L3 handover, the base station may, for example, indicate whether to perform PDCP re-establishment/recovery of the corresponding PDCP entity via PDCP re-establishment indication information (reestablishPDCP)/PDCP recovery indication information (recoveryPDCP) in the DRB-ToAddMod included in the radio bearer configuration included in an RRC reconfiguration message that includes a Reconfiguration WithSync.

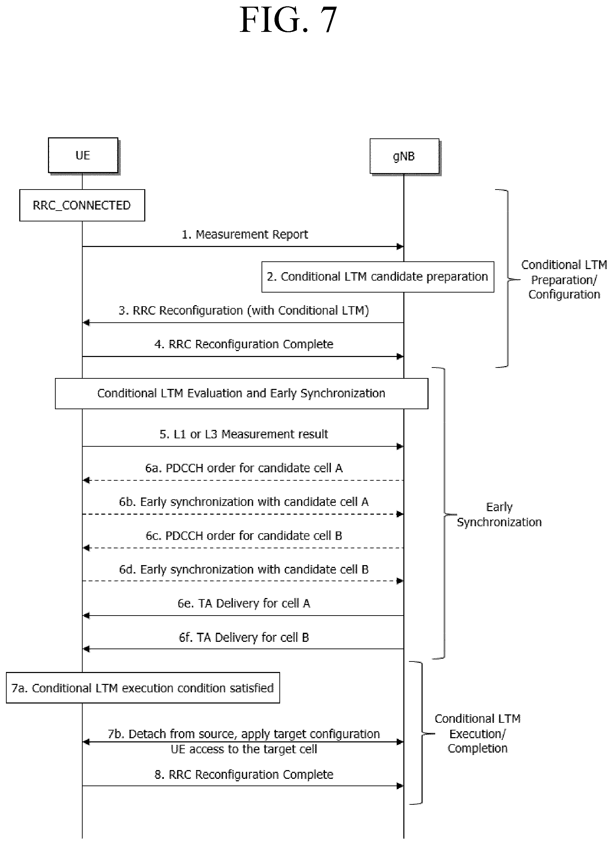

**FIG. 7 is a signal sequence diagram that illustrates a conditional LTM procedure according to an embodiment of the present disclosure.**

The conditional LTM procedure will be described in detail below with reference to FIG. 7.

1. The User Equipment (UE) transmits a Measurement Report message to the base station (gNB). The base station determines the conditional LTM configuration and starts conditional LTM preparation.

2. The source base station may request a conditional execution configuration from candidate cells, and the candidate cells provide a conditional configuration including their own execution conditions to be used for a subsequent conditional LTM.

3. The source base station transmits an RRC reconfiguration message to the UE, and the RRC reconfiguration message includes the conditional LTM configuration and conditional LTM execution conditions of the candidate cells.

4. The UE stores the conditional LTM candidate configuration and transmits an RRC reconfiguration complete message (RRCReconfigurationComplete) to the base station. Subsequently, the UE starts evaluating the execution conditions based on the provided configuration.

5/6. The source base station may trigger early synchronization for the UE (for example, based on the UE's L1 or L3 measurement reports, if configured).

The source base station may activate or deactivate the TCI states of the conditional LTM candidate cells. Depending on the network configuration, the UE may perform early UL synchronization with the conditional LTM candidate cell(s) by using UE-based TA measurement (if configured), or by being triggered by the source base station and transmitting a preamble towards the candidate cell(s). In the case of NW triggered UL synchronization, the UE receives a PDCCH order from the source cell to trigger

Contention-Free Random Access (CFRA) towards the candidate cell, and accordingly transmits a preamble towards the candidate cell(s) to perform early TA acquisition.

To minimize data interruption in the source cell due to CFRA towards the designated candidate cell(s), the UE does not receive a Random Access Response (RAR) for the purpose of acquiring a TA value. Instead, the candidate base station transmits a TA INFORMATION TRANSFER message to the source base station. The source base station may provide a TA value for each candidate cell with which the UE has performed uplink (UL) synchronization.

7. When a conditional LTM execution condition is met at the UE, the UE performs a conditional LTM switch at the satisfied candidate LTM cell by applying the configuration of the corresponding LTM candidate cell. If the UE has a valid TA value from the UL early synchronization of Step 6, the UE skips the random access channel (RACH) procedure. Otherwise, it performs RACH as part of the conditional LTM switch procedure.

8. The UE completes the conditional LTM cell switch procedure by transmitting an RRC reconfiguration complete message to the switched LTM cell. Furthermore, the UE does not release the valid TA value(s) of the candidate LTM cells provided with the conditional LTM configuration.

Steps 5-8 may be repeated multiple times for the execution of a subsequent conditional LTM cell switch using the conditional LTM candidate configuration provided in Step 2.

Hereinafter, principles related to conditional LTM will be described.

- Conditional LTM is supported for intra-CU LTM when Dual Connectivity (DC) is not configured. Inter-CU conditional LTM is not supported.
- Conditional LTM may be RACH-based or RACH-less. RACH-based conditional LTM includes Contention-Free Random Access (CFRA) and Contention-Based Random Access (CBRA), and for RACH-less conditional LTM, only Configured Grant (CG)-based is supported.
- User plane processing also applies to conditional LTM. Since there is no reception of an LTM cell switch command MAC CE in conditional LTM, the UE performs a MAC reset during the conditional LTM execution process. Whether to perform RLC re-establishment and PDCP data recovery during a cell switch is explicitly controlled by the network via RRC signaling.

According to an embodiment of the present disclosure, in the conditional LTM procedure described above, a user equipment receives a conditional LTM configuration and starts evaluating the execution condition for conditional LTM based on the received conditional LTM configuration. Subsequently, the user equipment stops the evaluation of the execution condition based on reception of Reconfiguration WithSync.

Additionally, the user equipment may receive the execution condition, and the execution condition may be included in a candidate Radio Resource Control (RRC) information element for conditional LTM. Here, the execution condition may be generated by a candidate cell. The candidate/target base station may transmit the generated execution condition to the source base station, and the user equipment may receive it via the source base station.

Meanwhile, the execution condition may be set as one of a Layer 3 (L3) condition associated with a measurement identity or a Layer 1 (L1) condition associated with an LTM Channel State Information (CSI) report configuration identity.

The conditional LTM configuration and the execution condition may be received via a first RRC reconfiguration message, and the Reconfiguration WithSync may be received via a second RRC reconfiguration message.

The aforementioned Reconfiguration WithSync is associated with a Layer 3 (L3) handover.

The embodiments in the disclosures may be applied independently or may be operated in any combination. Furthermore, although this disclosure is described based on a 5G NR system, it shall also fall within the scope of this disclosure for all cases where the concepts of this disclosure are applied, regardless of the specific wireless communication technology.

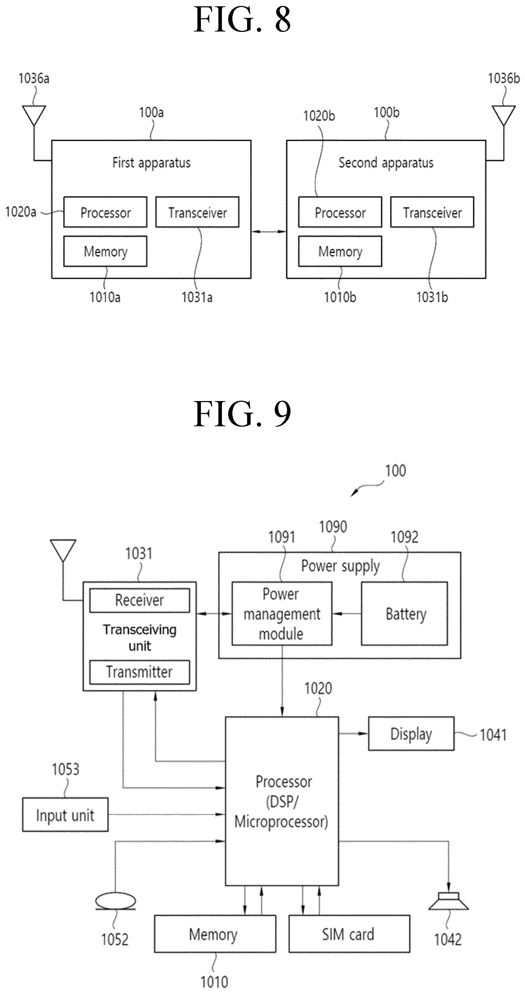

**FIG. 8 is a block diagram showing apparatuses according to an embodiment of the disclosure.**

Referring to FIG. 8, a wireless communication system may include a first apparatus 100a and a second apparatus 100b.

The first apparatus 100a may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The second apparatus 100b may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The first apparatus 100a may include at least one processor such as a processor 1020a, at least one memory such as a memory 1010a, and at least one transceiver such as a transceiver 103 1a. The processor 1020a may be tasked with executing the previously mentioned functions, procedures, and/or methods. The processor 1020a may be capable of implementing one or more protocols. For example, the processor 1020a may perform and manage one or more layers of a radio interface protocol. The memory 1010a may be connected to the processor 1020a and configured to store various types of information and/or instructions. The transceiver 1031a may be connected to the processor 1020a, and controlled to transceive radio signals.

The second apparatus 100b may include at least one processor such as a processor 1020b, at least one memory device such as a memory 1010b, and at least one transceiver such as a transceiver 1031b. The processor 1020b may be tasked with executing the previously mentioned functions, procedures, and/or methods. The processor 1020b may be capable of implementing one or more protocols. For example, the processor 1020b may manage one or more layers of a radio interface protocol. The memory 1010b may be connected to the processor 1020b and configured to store various types of information and/or instructions. The transceiver 1031b may be connected to the processor 1020b and controlled to transceive radio signaling.

The memory 1010a and/or the memory 1010b may be respectively connected internally or externally to the processor 1020a and/or the processor 1020b and connected to other processors through various technologies such as wired or wireless connection.

The first apparatus 100a and/or the second apparatus 100b may have one or more antennas. For example, an antenna 1036a and/or an antenna 1036b may be configured to transceive a radio signal.

**FIG. 9 is a block diagram showing a terminal (e.g., user equipment: UE) according to an embodiment of the disclosure.**

In particular, FIG. 9 illustrates the previously described apparatus of FIG. 8 in more detail.

The apparatus includes a memory 1010, a processor 1020, a transceiving unit 1031 (e.g., transceiving circuit), a power management module 1091 (e.g., power management circuit), a battery 1092, a display 1041, an input unit 1053 (e.g., input circuit), a loudspeaker 1042, a microphone 1052, a subscriber identification module (SIM) card, and one or more antennas. Some of the constituent elements are referred to as a unit in the disclosure. However, the embodiments are not limited thereto. For example, such term "unit" is also referred to as a circuit block, a circuit, or a circuit module.

The processor 1020 may be configured to implement the proposed functions, procedures, and/or methods described in the disclosure. The layers of the radio interface protocol may be implemented in the processor 1020. The processor 1020 may include an application-specific integrated circuit (ASIC), other chipsets, logic circuits, and/or data processing devices. The processor 1020 may be an application processor (AP). The processor 1020 may include at least one of a digital signal processor (DSP), a central processing unit (CPU), a graphics processing unit (GPU), and a modulator and demodulator (MODEM). For example, the processor 1020 may be SNAPDRAGON™ series of processors made by Qualcomm®, EXYNOS™ series of processors made by Samsung®, A series of processors made by Apple®, HELIO™ series of processors made by MediaTek®, ATOM™ series of processors made by Intel®, KIRIN™ series of processors made by HiSilicon®, or the corresponding next-generation processors.

The power management module 1091 manages a power for the processor 1020 and/or the transceiver 1031. The battery 1092 supplies power to the power management module 1091. The display 1041 outputs the result processed by the processor 1020. The input unit 1053 may be an individual circuit that receives an input from a user or other devices and convey the received input with associated information to the processor 1020. However, the embodiments are not limited thereto. For example, the input unit 1053 may be implemented as at least one of touch keys or buttons to be displayed on the display 1041 when the display 1041 is capable of sensing touches, generating related signals according to the sensed touches, and transferring the signals to the processor 1020. The SIM card is an integrated circuit used to securely store international mobile subscriber identity (IMSI) used for identifying a subscriber in a mobile telephoning apparatus such as a mobile phone and a computer and the related key. Many types of contact address information may be stored in the SIM card.

The memory 1010 is coupled with the processor 1020 in a way to operate and stores various types of information to operate the processor 1020. The memory may include read-only memory (ROM), random access memory (RAM), flash memory, a memory card, a storage medium, and/or other storage device. The embodiments described in the disclosure may be implemented as software program or application. In this case, such software program or application may be stored in the memory 1010. In response to a predetermined event, the software program or application stored in the memory 1010 may be fetched and executed by the processor 1020 for performing the function and the method described in this disclosure. The memory may be implemented inside of the processor 1020. Alternatively, the memory 1010 may be implemented outside of the processor 1020 and may be connected to the processor 1020 in communicative connection through various means which is well-known in the art.

The transceiver 1031 is connected to the processor 1020, receives, and transmits a radio signal under control of the processor 1020. The transceiver 1031 includes a transmitter and a receiver. The transceiver 1031 may include a baseband circuit to process a radio frequency signal. The transceiver controls one or more antennas to transmit and/or receive a radio signal. In order to initiate a communication, the processor 1020 transfers command information to the transceiver 1031 to transmit a radio signal that configures a voice communication data. The antenna functions to transmit and receive a radio signal. When receiving a radio signal, the transceiver 1031 may transfer a signal to be processed by the processor 1020 and convert a signal to baseband. The processed signal may be transformed into audible or readable information output through the speaker 1042.

The speaker 1042 outputs a sound related result processed by the processor 1020. The microphone 1052 receives audio input to be used by the processor 1020.

A user inputs command information like a phone number by pushing (or touching) a button of the input unit 1053 or a voice activation using the microphone 1052. The processor 1020 processes to perform a proper function such as receiving the command information, calling a call number, and the like. An operational data on driving may be extracted from the SIM card or the memory 1010. Furthermore, the processor 1020 may display the command information or driving information on the display 1041 for a user's recognition or for convenience.

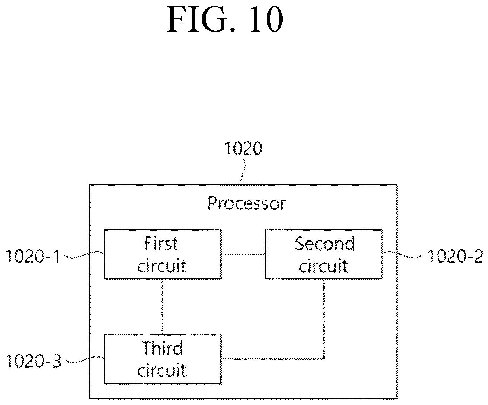

**FIG. 10 is a block diagram of a processor in accordance with an embodiment.**

Referring to FIG. 10, a processor 1020 may include a plurality of circuits to implement the proposed functions, procedures and/or methods described herein. For example, the processor 1020 may include a first circuit 1020-1, a second circuit 1020-2, and a third circuit 1020-3. Also, although not shown, the processor 1020 may include more circuits. Each circuit may include a plurality of transistors.

The processor 1020 may be referred to as an application-specific integrated circuit (ASIC) or an application processor (AP) and may include at least one of a digital signal processor (DSP), a central processing unit (CPU), and a graphics processing unit (GPU).

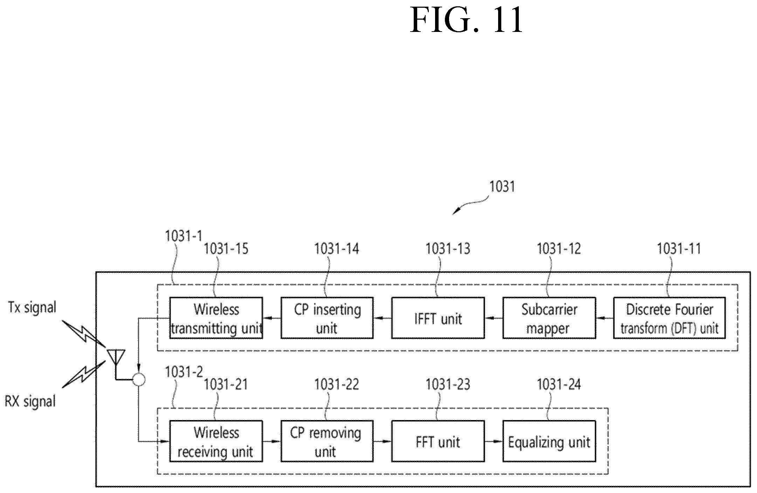

**FIG. 11 is a detailed block diagram of a transceiver of a first apparatus shown in FIG. 8 or a transceiving unit of an apparatus shown in FIG. 9.**

Referring to FIG. 11, the transceiving unit 1031 (e.g., transceiving circuit) includes a transmitter 1031-1 and a receiver 1031-2. The transmitter 1031-1 includes a discrete Fourier transform (DFT) unit 1031-11 (e.g., DFT circuit), a subcarrier mapper 1031-12 (e.g., subcarrier mapping circuit), an IFFT unit 1031-13 (e.g., IFFT circuit), a cyclic prefix (CP) insertion unit 1031-14 (e.g., CP insertion circuit), and a wireless transmitting unit 1031-15 (e.g., wireless transmitting circuit). The transmitter 1031-1 may further include a modulator. Further, the transmitter 1031-1 may for example include a scramble unit (e.g., scrambling circuit), a modulation mapper, a layer mapper, and a layer permutator, which may be disposed before the DFT unit 1031-11. That is, to prevent a peak-to-average power ratio (PAPR) from increasing, the transmitter 1031-1 subjects information to the DFT unit 1031-11 before mapping a signal to a subcarrier. The signal spread (or pre-coded) by the DFT unit 1031-11 is mapped onto a subcarrier by the subcarrier mapper 1031-12 and made into a signal on the time axis through the IFFT unit 1031-13. Some of constituent elements are referred to as a unit in the disclosure. However, the embodiments are not limited thereto. For example, such term "unit" is also referred to as a circuit block, a circuit, or a circuit module.

The DFT unit 1031-11 performs DFT on input symbols to output complex-valued symbols. For example, when Ntx symbols are input (here, Ntx is a natural number), DFT has a size of Ntx. The DFT unit 1031-11 may be referred to as a transform precoder. The subcarrier mapper 1031-12 maps the complex-valued symbols onto respective subcarriers in the frequency domain. The complex-valued symbols may be mapped onto resource elements corresponding to resource blocks allocated for data transmission. The subcarrier mapper 1031-12 may be referred to as a resource element mapper. The IFFT unit 1031-13 performs IFFT on the input symbols to output a baseband signal for data as a signal in the time domain. The CP inserting unit 1031-14 copies latter part of the baseband signal for data and inserts the latter part in front of the baseband signal for data. CP insertion prevents inter-symbol interference (ISI) and inter-carrier interference (ICI), thereby maintaining orthogonality even in a multipath channel.

On the other hand, the receiver 1031-2 includes a wireless receiving unit 1031-21 (e.g., wireless receiving circuit), a CP removing unit 1031-22 (e.g., CP removing circuit), an FFT unit 1031-23 (e.g., FFT circuit), and an equalizing unit 1031-24 (e.g., equalizing circuit). The wireless receiving unit 1031-21, the CP removing unit 1031-22, and the FFT unit 1031-23 of the receiver 1031-2 perform reverse functions of the wireless transmitting unit 1031-15, the CP inserting unit 1031-14, and the IFFT unit 1031-13 of the transmitter 1031-1. The receiver 1031-2 may further include a demodulator.

According to the embodiments of the disclosure, a configuration for supporting conditional LTM in a wireless communication system can be effectively controlled.

Although the preferred embodiments of the disclosure have been illustratively described, the scope of the disclosure is not limited to only the specific embodiments, and the disclosure can be modified, changed, or improved in various forms within the spirit of the disclosure and within a category written in the claim.

In the above exemplary systems, although the methods have been described in the form of a series of steps or blocks, the disclosure is not limited to the sequence of the steps, and some of the steps may be performed in different order from other or may be performed simultaneously with other steps. Further, those skilled in the art will understand that the steps shown in the flowcharts are not exclusive and may include other steps or one or more steps of the flowcharts may be deleted without affecting the scope of the disclosure.

Claims of the present disclosure may be combined in various manners. For example, technical features of the method claim of the present disclosure may be combined to implement a device, and technical features of the device claim of the present disclosure may be combined to implement a method. In addition, the technical features of the method claim and the technical features of the device claim of the present disclosure may be combined to implement a device, and technical features of the method claim and the technical features of the device claim of the present disclosure may be combined to implement a method.

**Claims**

1. A method of a terminal to operate in a wireless communication system, the method comprising:

   receiving a conditional layer 1 (L1)/layer 2 (L2) triggered mobility (LTM) configuration;
   starting an evaluation of an execution condition for conditional LTM based on the received conditional LTM configuration; and
   stopping the evaluation of the execution condition,
   wherein the stopping of the evaluation is performed based on reception of a reconfiguration with synchronization (Reconfiguration WithSync).

2. The method of claim 1, further comprising:

   receiving the execution condition,
   wherein the execution condition is included in a candidate radio resource control (RRC) information element for the conditional LTM.

3. The method of claim 2, wherein the execution condition is generated by a candidate cell.

4. The method of claim 2, wherein the execution condition is set as one of a layer 3 (L3) condition associated with a measurement identity or a layer 1 (L1) condition associated with an LTM channel state information (CSI) report configuration identity.

5. The method of claim 2, wherein the conditional LTM configuration and the execution condition are received via a first RRC reconfiguration message, and the Reconfiguration WithSync is received via a second RRC reconfiguration message.

6. The method of claim 1, wherein the ReconfigurationWithSync is associated with a layer 3 (L3) handover.

7. A terminal in a wireless communication system comprising:

   at least one processor; and
   at least one memory configured to store instructions and operably electrically connectable to the at least one processor, wherein operations performed based on the instructions executed by the at least one processor comprise:

      receiving a conditional layer 1 (L1)/layer 2 (L2) triggered mobility (LTM) configuration;
      starting an evaluation of an execution condition for conditional LTM based on the received conditional LTM configuration; and
      stopping the evaluation of the execution condition,
      wherein the stopping of the evaluation is performed based on reception of a reconfiguration with synchronization ReconfigurationWithSync.

8. The terminal of claim 7, wherein the operations performed based on the instructions being executed by the at least one processor further comprise:

   receiving the execution condition,
   wherein the execution condition is included in a candidate radio resource control (RRC) information element for the conditional LTM.

9. The terminal of claim 8, wherein the execution condition is generated by a candidate cell.

10. The terminal of claim 8, wherein the execution condition is set as one of a layer 3 (L3) condition associated with a measurement identity or a layer 1 (L1) condition associated with an LTM channel state information (CSI) report configuration identity.

11. The terminal of claim 8, wherein the conditional LTM configuration and the execution condition are received via a first RRC reconfiguration message, and the Reconfiguration WithSync is received via a second RRC reconfiguration message.

**12.** The terminal of claim 7, wherein the Reconfiguration WithSync is associated with a layer 3 (L3) handover.

# FIG. 1

# FIG. 2

| One Frame (10ms) |
|---|

| Half-Frame (5ms) | Half-Frame (5ms) |
|---|---|

| Subframe 0 (1ms) | ... | Subframe 4 (1ms) | Subframe 5 (1ms) | ... | Subframe 9 (1ms) |
|---|---|---|---|---|---|

Subframe (1ms)

| 15KHz | Slot 0 (14symbols) |
|---|---|

1ms

| 30KHz | Slot 0 (14symbols) | Slot 1 |
|---|---|---|

500us

| 60KHz | Slot 0 (14symbols) | Slot 1 | Slot 2 | Slot 3 |
|---|---|---|---|---|

250us

| 120KHz | Slot 0 (14symbols) | Slot 1 | Slot 2 | Slot 3 | Slot 4 | Slot 5 | Slot 6 | Slot 7 |
|---|---|---|---|---|---|---|---|---|

125us

# FIG. 3A

# FIG. 3B

# FIG. 3C

# FIG. 4

Resource grid

A carrier
(up to 3300 subcarriers, i. e., 275 RBs)

A BWP

1 RB = 12 subcarriers

1 RE

1 subcarrier

1 symbol

k = 0

l = 0 · · · · ·

# FIG. 5

# FIG. 6

# FIG. 7

# FIG. 8

1036a
100a
1020b
100b
1036b

First apparatus
Second apparatus

1020a — Processor | Transceiver
Processor | Transceiver

Memory
Memory

1010a
1031a
1010b
1031b

# FIG. 9

100

1091 1090 1092

1031

Power supply

Receiver
Power management module
Battery

Transceiving unit

Transmitter

1020

Display — 1041

1053

Processor (DSP/ Microprocessor)

Input unit

1052

Memory
SIM card
1042

1010

# FIG. 10

1020

Processor

1020-1 — First circuit

Second circuit — 1020-2

1020-3 — Third circuit

# FIG. 11

1031

1031-1
1031-15     1031-14     1031-13     1031-12     1031-11

| Wireless transmitting unit | CP inserting unit | IFFT unit | Subcarrier mapper | Discrete Fourier transform (DFT) unit |

Tx signal

RX signal

1031-2
1031-21     1031-22     1031-23     1031-24

| Wireless receiving unit | CP removing unit | FFT unit | Equalizing unit |

EP 4 712 569 A1

Europäisches
Patentamt
European
Patent Office
Office européen
des brevets

# EUROPEAN SEARCH REPORT

**Application Number**

EP 25 20 1859

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/128727 A1 (KT CORP [KR]) 6 July 2023 (2023-07-06) * abstract * & US 2025/088926 A1 (HONG SUNG PYO [KR]) 13 March 2025 (2025-03-13) * paragraphs [0217] - [0220] * ----- | 1-12 | INV. H04W36/36 H04W36/00 |
| X,P | SU YI ET AL: "Discussion on conditional Intra-CU LTM", 3GPP DRAFT; R2-2502033; TYPE DISCUSSION; NR_MOB_PH4-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Wuhan, CN; 20250407 - 20250411 28 March 2025 (2025-03-28), XP052731863, Retrieved from the Internet: URL:https://www.3gpp.org/ftp/tsg_ran/WG2_RL2/TSGR2_129bis/Docs/R2-2502033.zip R2-2502033_mobility_cLTM.docx [retrieved on 2025-03-28] * the whole document * ----- | 1-12 | |

**TECHNICAL FIELDS SEARCHED (IPC)**

H04W

The present search report has been drawn up for all claims

| Place of search | Date of completion of the search | Examiner |
|---|---|---|
| Munich | 19 January 2026 | Wolf, William |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 20 1859

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2026

| Patent document cited in search report | Publication date | Patent family member(s) | Publication date |
|---|---|---|---|
| WO 2023128727 A1 | 06-07-2023 | EP 4462866 A1<br>US 2025088926 A1<br>WO 2023128727 A1 | 13-11-2024<br>13-03-2025<br>06-07-2023 |

EPO FORM P0459

For more details about this annex : see Official Journal of the European Patent Office, No. 12/82

**EP 4 712 569 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 1020240125178 A
- WO 1020240125181 A
- WO 1020250125218 A